# EUROPEAN PATENT APPLICATION

(11) **EP 4 425 737 A1**
(43) Date of publication of application: **04.09.2024**
(21) Application number: 22895472.3
(22) Date of filing: 07.11.2022
(51) Int. Cl.: H02J 7/00, B25F 5/00, H02J 7/02

(54) **POWER SUPPLY SYSTEM, POWER SUPPLY DEVICE, AND ADAPTER**

(30) Priority: 19.11.2021 JP 2021188756; 19.11.2021 JP 2021188757
(71) Applicant: Makita Corporation, Anjo-shi Aichi 446-8502 (JP)
(72) Inventor: ENDO, Takayoshi, Anjo-shi, Aichi 446-8502 (JP)
(74) Representative: Kramer Barske Schmidtchen Patentanwälte PartG mbB
(86) International application number: PCT/JP2022/041421
(87) International publication number: WO 2023/090190

(57) **Abstract**

A power-supply system in one aspect of the present disclosure includes an electric work machine, a power-supply apparatus, and an adapter. The power-supply apparatus outputs a power-supply voltage. The adapter is coupled between the power-supply apparatus and the electric work machine and relays the power-supply voltage output from the power-supply apparatus to the electric work machine. A work machine communicator of the electric work machine performs, with the adapter, a digital communication in which a voltage level of an electrical signal is sequentially switched between a high level and a low level over time according to communication content. A power-supply communicator of the power-supply apparatus performs the digital communication with the adapter. An adapter communicator of the adapter performs the digital communication with the electric work machine and performs the digital communication with the power-supply apparatus.

## Description

### CROSS-REFERENCE TO RELATED APPLICATIONS

This international application claims the benefit of Japanese Patent Application No. 2021-188756 and Japanese Patent Application No. 2021-188757 both filed on November 19, 2021 with the Japan Patent Office, the entire disclosures of Japanese Patent Application No. 2021-188756 and Japanese Patent Application No. 2021-188757 are incorporated herein by reference.

### TECHNICAL FIELD

The present disclosure relates to a power-supply system, a power-supply apparatus and an adapter.

### BACKGROUND ART

Patent Document 1 discloses a power-supply apparatus that contains battery packs and outputs a power-supply voltage suitable for a connected adapter based on adapter identification information obtained from the connected adapter.

Patent Document 2 discloses a power-supply apparatus that includes a first DC power supply and a second DC power supply connected in parallel with each other, and delivers a power-supply voltage to an external load by interchanging between the first DC power supply and the second DC power supply.

### PRIOR ART DOCUMENTS

### PATENT DOCUMENTS

Patent Document 1: Japanese Unexamined Patent Application Publication No. 2020-119702
Patent Document 2: Japanese Patent No. 6373661

### SUMMARY OF THE INVENTION

### PROBLEMS TO BE SOLVED BY THE INVENTION

In an electric work machine configured to control a discharge from a power-supply apparatus based on a discharge control parameter transmitted to and received from the power-supply apparatus through digital communication, there has been a situation where the electric work machine cannot be properly driven, which results in a loss of convenience.

In recent years, electric work machines have become more powerful, and there are electric work machines for which, for example, a 36 V power supply is sufficient (hereinafter, also referred to as "low-output electric work machine") and electric work machines for which, for example, the 36 V power supply is insufficient in power (hereinafter, also referred to as "high-output electric work machine"). Therefore, when the low-output electric work machine is used, a power-supply apparatus for delivering a power-supply voltage adapted to the low-output electric work machine (hereinafter, also referred to as "low output power-supply apparatus") must be used. Similarly, when the high-output electric work machine is used, a power-supply apparatus for delivering a power-supply voltage adapted to the high-output electric work machine (hereinafter, also referred to as "high output power-supply apparatus") must be used. That is, a user who uses both the low-output and high-output electric work machines has to prepare both the low and high output power-supply apparatuses, which has been inconvenient.

One aspect of the present disclosure improves the convenience of a user who uses an electric work machine.

Another aspect of the present disclosure improves the convenience of a user who uses both a low-output electric work machine and a high-output electric work machine.

### MEANS FOR SOLVING THE PROBLEMS

A power-supply system in one aspect of the present disclosure includes an electric work machine, a power-supply apparatus, and an adapter. The power-supply apparatus is configured to output a power-supply voltage to be delivered to the electric work machine. The adapter is configured to be coupled between the power-supply apparatus and the electric work machine to thereby relay the power-supply voltage output from the power-supply apparatus to the electric work machine.

The electric work machine includes a work machine communicator. The work machine communicator is configured to perform, with the adapter, a digital communication in which a voltage level of an electrical signal sequentially switches between a high level and a low level over time according to communication content.

The power-supply apparatus includes a power-supply communicator. The power-supply communicator is configured to perform the digital communication with the adapter.

The adapter includes an adapter communicator. The adapter communicator is configured to perform the digital communication with the electric work machine and to perform the digital communication with the power-supply apparatus.

This power-supply system can perform a data communication between the power-supply apparatus and the electric work machine through the adapter. This allows the above-described power-supply system to inhibit the occurrence of a situation in which the electric work machine cannot be properly driven because a discharge control parameter cannot be transmitted and received between the power-supply apparatus and the electric work machine and to thereby improve the convenience for a user of the electric work machine.

A power-supply apparatus in another aspect of the present disclosure outputs a power-supply voltage to be delivered to an electric work machine, and includes an adapter attachment portion and a power-supply communicator.

The adapter attachment portion is configured to detachably attach thereto an adapter that is coupled between the power-supply apparatus and the electric work machine and relays the power-supply voltage output from the power-supply apparatus to the electric work machine.

The power-supply communicator is configured to perform, with the adapter, a digital communication in which a voltage level of an electrical signal sequentially switches between a high level and a low level over time according to communication content.

This power-supply apparatus is the one used in the above-described power-supply system and can exhibit the effects similar to those of the above-described power-supply system.

An adapter in still another aspect of the present disclosure is coupled between an electric work machine and a power-supply apparatus that outputs a power-supply voltage to be delivered to the electric work machine, and includes a power supply attachment portion, a work machine attachment portion, and an adapter communicator.

The power supply attachment portion is configured to detachably attach the power-supply apparatus thereto. The work machine attachment portion is configured to detachably attach the electric work machine thereto. The adapter communicator is configured to perform, with the electric work machine, a digital communication in which a voltage level of an electrical signal sequentially switches between a high level and a low level over time according to communication content, and to perform the digital communication with the power-supply apparatus.

The adapter is the one used in the above-described power-supply system and can exhibit the effects similar to those of the above-described power-supply system.

A power-supply apparatus in another aspect of the present disclosure includes at least two battery units contained in a power-supply apparatus, an attachment portion, a voltage outputter, and an output controller.

The attachment portion is configured to detachably attach thereto an adapter to be coupled between the power-supply apparatus and an electric work machine.

The voltage outputter is configured to selectively output at least a first voltage and a second voltage lower than the first voltage using the at least two battery units.

The output controller is configured to switch a voltage to be output from the voltage outputter between the first voltage and the second voltage based on an electrical signal output from the adapter attached to the attachment portion.

This power-supply apparatus can switch between the first voltage and the second voltage to output either one of them based on the electrical signal output from the adapter coupled to the electric work machine. This allows the above-described power-supply apparatus to output the first voltage when a high-output electric work machine is used, and to output the second voltage when a low-output electric work machine is used. Therefore, the power-supply apparatus can be a power supply compatible with both the low-output electric work machine and the high-output electric work machine, improving the convenience of a user who uses both the low-output electric work machine and the high-output electric work machine.

A power-supply system in another aspect of the present disclosure includes the above-described power-supply apparatus and the above-described adapter. This power-supply system can exhibit the effects similar to those of the above-described power-supply apparatus.

### BRIEF DESCRIPTION OF THE DRAWINGS

FIG. 1 is a block diagram showing a schematic structure of a power-supply system of a first embodiment.
FIG. 2 is a perspective view of an electric work machine.
FIG. 3 is a perspective view of a power-supply apparatus.
FIG. 4 shows a power-supply apparatus, a dual port adapter, and a battery attachment portion of the first embodiment.
FIG. 5 is a block diagram showing an electrical configuration of the power-supply apparatus.
FIG. 6 is a block diagram showing an electrical configuration of the dual port adapter.
FIG. 7 is a block diagram showing an electrical configuration of the electric work machine.
FIG. 8 is a circuit diagram showing an electrical configuration of the power-supply apparatus.
FIG. 9 is a circuit diagram showing a configuration of interlock circuits.
FIG. 10 is a block diagram showing a coupling of the power-supply apparatus, the dual port adapter, and the electric work machine.
FIG. 11A is a flow chart showing a first half of an adapter coupling control process of the first embodiment.
FIG. 11B is a flow chart showing a latter half of the adapter coupling control process of the first embodiment.
FIG. 12 is a flow chart showing a battery coupling control process.
FIG. 13 is a block diagram showing a schematic structure of a power-supply system of a second embodiment.
FIG. 14 is a flow chart showing an adapter coupling control process of the second embodiment.
FIG. 15 shows a power-supply apparatus, a dual port adapter, and a battery attachment portion of a third embodiment.
FIG. 16 shows a power-supply apparatus, a dual port adapter, and a battery attachment portion of a fourth embodiment.

### EXPLANATION OF REFERENCE NUMERALS

1...power-supply system, 2...power-supply apparatus, 3...dual port adapter, 4...electric work machine, 13...battery attachment portion, 33...power-supply connector, 44...adapter connector, 50...built-in battery, 51...first battery, 52... second battery, 54...battery MPU, 61...battery communicator, 91, 101...positive electrode terminal, 92, 102...negative electrode terminal, 93, 103...signal terminal, 94, 104...communication terminal, 95, 105...detection terminal, 145, 149, 154, 159...adapter communicator, 181, 186...work machine communicator

### MODE FOR CARRYING OUT THE INVENTION

### [Overview of Embodiments]

A power-supply system in one embodiment may include an electric work machine. Additionally or alternatively, the power-supply system may include a power-supply apparatus. The power-supply apparatus may be configured to output a power-supply voltage to be delivered to the electric work machine. Additionally or alternatively, the power-supply system may include an adapter. The adapter may be configured to be coupled between the power-supply apparatus and the electric work machine and to relay the power-supply voltage output from the power-supply apparatus to the electric work machine. Additionally or alternatively, the electric work machine may include a work machine communicator. The work machine communicator may be configured to perform, with the adapter, a digital communication in which a voltage level of an electrical signal is sequentially switched between a high level and a low level over time according to communication content. Additionally or alternatively, the power-supply apparatus may include a power-supply communicator. The power-supply communicator may be configured to perform the digital communication with the adapter. Additionally or alternatively, the adapter may include an adapter communicator. The adapter communicator may be configured to perform the digital communication with the electric work machine and to perform the digital communication with the power-supply apparatus.

When the power-supply system in one embodiment includes the above described electric work machine, the above described power-supply apparatus and the above described adapter, this power-supply system can improve the convenience of a user who uses the electric work machine.

Additionally or alternatively, a first communication protocol of the digital communication between the power-supply communicator and the adapter communicator may be different from a second communication protocol of the digital communication between the work machine communicator and the adapter communicator. In this power-supply system, it is possible to perform appropriate data communications between the power-supply communicator and the adapter communicator, and also between the work machine communicator and the adapter communicator.

Additionally or alternatively, the power-supply apparatus may be configured to selectively output, as the power-supply voltage, at least 0 V, a first voltage higher than 0 V, and a second voltage higher than 0 V and lower than the first voltage according to a connection status with the adapter and the electric work machine. In this power-supply system, it is possible to output an appropriate power-supply voltage according to the connection status with the adapter and the electric work machine.

Additionally or alternatively, the power-supply apparatus may be configured to output the second voltage when the power-supply apparatus detects that the adapter is coupled to the power-supply apparatus. In this power-supply system, in a state where the adapter is not attached to the electric work machine, it is possible not to output the first voltage higher than the second voltage from an attachment portion provided to the adapter side for attaching the electric work machine (hereinafter, "work machine attachment portion") thereto. With this configuration, even if a short circuit is generated due to water attached to the work machine attachment portion, it is possible to inhibit a short circuit at a high voltage and to inhibit damage to the adapter in the power-supply system. Furthermore, even if a voltage is generated outside the adapter through the water, it is possible to inhibit other contacting objects from being affected because the voltage is low. In addition, this power-supply system can inhibit unnecessary output of the power-supply voltage when the adapter is not coupled to the power-supply apparatus and can reduce power consumption.

Additionally or alternatively, the power-supply apparatus may be configured to obtain, by the digital communication with the adapter, voltage compatibility information indicating a voltage with which the adapter is compatible. This power-supply system allows the power-supply apparatus to recognize the voltage with which the adapter is compatible.

Additionally or alternatively, the power-supply apparatus may be configured to determine, based on the voltage compatibility information obtained, whether the power-supply voltage to be output be maintained at the second voltage or be switched from the second voltage to the first voltage. In this power-supply system, it is possible to output an appropriate power-supply voltage according to the adapter.

Additionally or alternatively, the power-supply apparatus may be configured to switch from the second voltage to the first voltage after the adapter is coupled to the electric work machine in a case where the power-supply apparatus determines to switch from the second voltage to the first voltage. This power-supply apparatus can inhibit unnecessary output of the first voltage when the adapter is not coupled to the electric work machine and can reduce power consumption.

Additionally or alternatively, the adapter compatible with the first voltage may be configured with a first adapter and a second adapter. In this power-supply system, two ways of power supply can be made: power supply using both the first adapter and the second adapter; and power supply using either the first adapter or the second adapter.

Additionally or alternatively, the first adapter may be coupled in series with the second adapter. In this power-supply system, it is possible to output the first voltage using both the first adapter and the second adapter and to output the second voltage using either the first adapter or the second adapter.

Additionally or alternatively, the electric work machine may further include a first attachment portion and a second attachment portion. The first attachment portion may be configured to detachably attach the first adapter thereto. The second attachment portion may be configured to detachably attach the second adapter thereto. Additionally or alternatively, the first attachment portion may further include a first work machine positive terminal and a first work machine negative terminal, to both of which the power-supply voltage is delivered from the first adapter. Additionally or alternatively, the second attachment portion further includes a second work machine positive terminal and a second work machine negative terminal, to both of which the power-supply voltage is delivered from the second adapter. Additionally or alternatively, the first work machine negative terminal may be coupled to the second work machine positive terminal. Additionally or alternatively, the first adapter may further include a first adapter positive terminal and a first adapter negative terminal. The first adapter positive terminal may be coupled to the first work machine positive terminal when the adapter is attached to the first attachment portion. The first adapter negative terminal may be coupled to the first work machine negative terminal when the adapter is attached to the first attachment portion. Additionally or alternatively, the second adapter may further include a second adapter positive terminal and a second adapter negative terminal. The second adapter positive terminal may be coupled to the second work machine positive terminal when the adapter is attached to the second attachment portion. The second adapter negative terminal may be coupled to the second work machine negative terminal when the adapter is attached to the second attachment portion. Additionally or alternatively, the adapter may be configured to detect that the first adapter is attached to the first attachment portion based on a voltage of the first adapter negative terminal. In this power-supply system, when the first adapter is further attached to the first attachment portion in a state that the second adapter has already been attached to the second attachment portion, it is possible to detect that the first adapter has been attached to the first attachment portion.

Additionally or alternatively, the first adapter and the second adapter may each include a microcomputer. This power-supply system allows the first adapter and the second adapter to perform calculation processing using a program.

Additionally or alternatively, a ground of the microcomputer of the first adapter may be common with a ground of the microcomputer of the second adapter. This power-supply system allows the microcomputer of the first adapter and the microcomputer of the second adapter to have the identical reference voltage.

Additionally or alternatively, the power-supply system may further include a level shift circuit. The level shift circuit may be configured to shift the voltage level of the electrical signal transmitted and received by the digital communication between the first adapter and the electric work machine. In this power-supply system, it is possible to perform appropriate digital communication between the first adapter and the electric work machine even if the first adapter and the electric work machine do not have the identical reference voltage.

Additionally or alternatively, the first adapter may be configured to output, to the electric work machine, a discharge prohibition signal input from the power-supply apparatus to the adapter. In this power-supply system, it is possible to reduce the processing load of the second adapter.

Additionally or alternatively, the second adapter may further include a temperature detector. The temperature detector may be configured to detect a temperature of a cord accommodated in the second adapter. In this power-supply system, it is possible to simplify the configuration of the first adapter.

A power-supply apparatus in one embodiment may output a power-supply voltage to be delivered to an electric work machine and may include an adapter attachment portion. The adapter attachment portion may be configured to detachably attach an adapter to be coupled between the power-supply apparatus and the electric work machine and to relay the power-supply voltage output from the power-supply apparatus to the electric work machine. Additionally or alternatively, the power-supply apparatus may include a power-supply communicator. The power-supply communicator may be configured to perform, with the adapter, a digital communication in which a voltage level of an electrical signal is sequentially switched between a high level and a low level over time according to communication content. This power-supply apparatus is the one used in the above-described power-supply system and can improve the convenience of the user who uses the electric work machine.

An adapter in one embodiment may be coupled between an electric work machine and a power-supply apparatus to output a power-supply voltage to be delivered to the electric work machine, and may include a power supply attachment portion. The power supply attachment portion may be configured to detachably attach the power-supply apparatus thereto. Additionally or alternatively, the adapter may include a work machine attachment portion. The work machine attachment portion may be configured to detachably attach the electric work machine thereto. Additionally or alternatively, the adapter may include an adapter communicator. The adapter communicator may be configured to perform, with the electric work machine, a digital communication in which a voltage level of an electrical signal is sequentially switched between a high level and a low level over time according to communication content, and the adapter communicator may be configured to perform the digital communication with the power-supply apparatus. This adapter is the one used in the above-described power-supply system and can improve the convenience of the user who uses the electric work machine.

The power-supply apparatus in one embodiment may include at least two battery units contained in the power-supply apparatus. Additionally or alternatively, the power-supply apparatus may include an attachment portion. The attachment portion may be configured to detachably attach thereto an adapter configured to be coupled between the power-supply apparatus and an electric work machine. Additionally or alternatively, the power-supply apparatus may include a voltage outputter. The voltage outputter may be configured to selectively output at least a first voltage and a second voltage lower than the first voltage using the at least two battery units. Additionally or alternatively, the power-supply apparatus may include an output controller. The output controller may be configured to switch a voltage output from the voltage outputter between the first voltage and the second voltage based on an electrical signal output from the adapter attached to the attachment portion.

If a power-supply apparatus in one embodiment includes the above-described attachment portion, voltage outputter, and output controller, this power-supply apparatus can improve the convenience of the user who uses both the low-output electric work machine and the high-output electric work machine.

Additionally or alternatively, the power-supply apparatus may allow the output controller to cause the voltage outputter to output the second voltage upon a transition from a state where the adapter is not attached to the attachment portion to a state where the adapter is attached to the attachment portion. This power-supply apparatus eliminates the necessity for the user to operate the power-supply apparatus to output the second voltage, and the convenience of the user can be further improved.

Additionally or alternatively, the power-supply apparatus may further include a communicator. The communicator may be configured to perform a data communication with the adapter. This power-supply apparatus can obtain, from the adapter by the data communication, an electrical signal to switch between the first voltage and the second voltage.

Additionally or alternatively, the output controller may cause the voltage outputter to output the first voltage when the data communication is established with the adapter and when a preset voltage switching condition is satisfied. This power-supply apparatus eliminates the necessity for the user to operate the power-supply apparatus to output the first voltage, and the convenience of the user can be further improved.

Additionally or alternatively, the voltage outputter may further include a first current path to output the first voltage using the at least two battery units. Additionally or alternatively, the voltage outputter may include a second current path to output the second voltage using the at least two battery units. Additionally or alternatively, the voltage outputter may include a switching circuit configured to selectively switch between the first current path and the second current path. This power-supply apparatus can switch the voltage output from the voltage outputter between the first voltage and the second voltage by switching between the first current path and the second current path.

Additionally or alternatively, the at least two battery units may include a first battery unit and a second battery unit. Additionally or alternatively, the voltage outputter may further include a first switch and a second switch disposed on a first short-circuit path extending from a positive electrode to a negative electrode of the first battery unit. Additionally or alternatively, the voltage outputter may include a third switch and a fourth switch disposed on a second short-circuit path extending from a positive electrode to a negative electrode of the second battery unit. Additionally or alternatively, the voltage outputter may include a first interlock circuit. The first interlock circuit may be configured to control the first switch and the second switch so that the first switch and the second switch are not brought into their ON-states simultaneously. Additionally or alternatively, the voltage outputter may include a second interlock circuit. The second interlock circuit may be configured to control the third switch and the fourth switch so that the third switch and the fourth switch are not brought into their ON-states simultaneously. This power-supply apparatus can inhibit an occurrence of a situation where the positive and negative electrodes short-circuit in the first and second battery units.

Additionally or alternatively, the power-supply apparatus may further include a connector for coupling to a device other than the adapter.

Additionally or alternatively, the connector may be further configured to be coupleable to an external device. The connector may include an external communication terminal to be coupled to the external device to perform a data communication with the external device. This power-supply apparatus can perform a data communication with the external device.

Additionally or alternatively, the connector may be further configured to be able to couple thereto a charger configured to charge the at least two battery units. This power-supply apparatus can charge the at least two battery units using the charger.

Additionally or alternatively, a data communication may be performed between the power-supply apparatus and the charger through the external communication terminal of the connector. This power-supply apparatus can perform a data communication with the charger.

Additionally or alternatively, the at least two battery units include a first battery unit and a second battery unit. The first battery unit and the second battery unit may be coupled in series with each other by coupling a negative electrode of the first battery unit to a positive electrode of the second battery unit. Additionally or alternatively, the connector may further include a positive terminal and a negative terminal. Additionally or alternatively, the positive terminal may be coupled to an intermediate voltage line to which a voltage of the positive electrode of the second battery unit is applied through a charging switch. Additionally or alternatively, the negative terminal may be coupled to a negative electrode line to which a voltage of the negative electrode of the second battery unit is applied. This power-supply apparatus can separately charge the first battery unit and the second battery unit.

Additionally or alternatively, the first voltage may be higher than 42 V and the second voltage may be lower than or equal to 42 V.

A power-supply system in one embodiment may include the above-described power-supply apparatus. Additionally or alternatively, the power-supply system may include the above-described adapter.

When a power-supply system in one embodiment includes the above-described power-supply apparatus and the above-described adapter, it is possible to improve the convenience of the user who uses both the low-output electric work machine and the high-output electric work machine.

In one embodiment, the above-described features may be combined in any way. In one embodiment, any of the above-described features may be excluded.

### [Specific Example Embodiments]

### [First Embodiment]

Hereinafter, an example first embodiment of the present disclosure is described with reference to the drawings.

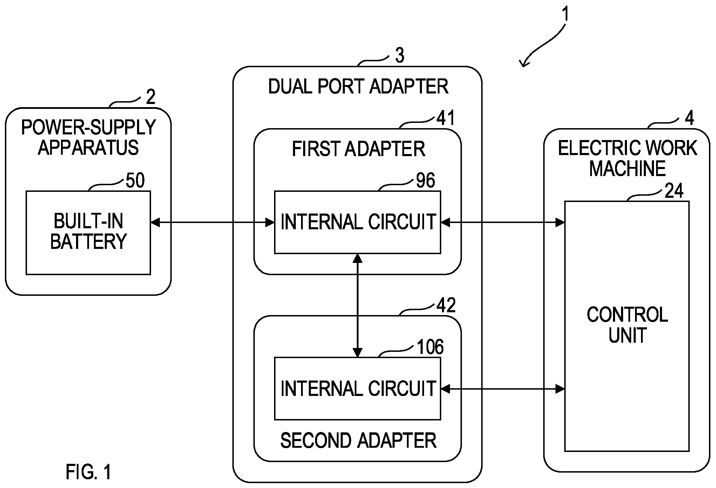

As shown in FIG. 1, a power-supply system 1 of this embodiment includes a power-supply apparatus 2, a dual port adapter 3, and an electric work machine 4.

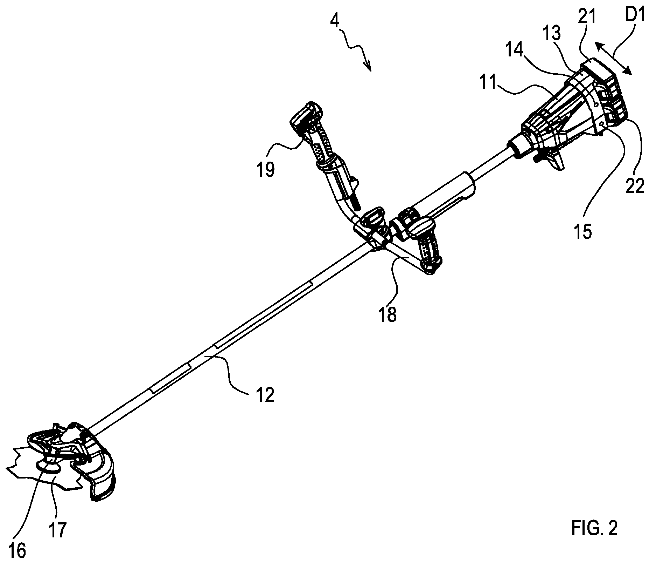

As shown in FIG. 2, the electric work machine 4 of this embodiment is in the form of a grass cutter, for example, and includes a motor unit 11 and a shaft pipe 12 connected to a first end of the motor unit 11.

The motor unit 11 contains a motor 23 and a control unit 24 for controlling the motor 23, which are described later, inside the motor unit 11.

The electric work machine 4 includes a battery attachment portion 13 attached to a second end of the motor unit 11. To the battery attachment portion 13, a first battery pack 21 and a second battery pack 22 are detachably attached.

The battery attachment portion 13 is configured to allow the first battery pack 21 and the second battery pack 22 to be separately attached and detached by sliding each of the first battery pack 21 and the second battery pack 22 along an attachment/detachment direction D1 on the battery attachment portion 13.

The electric work machine 4 includes a first indicator 14 and a second indicator 15 attached to an outer cover of the motor unit 11. The first indicator 14 displays a status of the first battery pack 21. The second indicator 15 displays a status of the second battery pack 22.

The shaft pipe 12 is formed into an elongated hollow bar shape. The motor unit 11 is attached to a first end of the shaft pipe 12, and a cutter attachment portion 16 is attached to a second end of the shaft pipe 12. To the cutter attachment portion 16, a cutter 17 is detachably attached.

The cutter 17 is a member shaped like a disc overall with two or more teeth arranged along an outer edge of the disc. The cutter 17 spins to cut grass and small-diameter trees.

The electric work machine 4 includes a handle 18. The handle 18 is a member to be gripped by an operator when the operator cuts grass with the electric work machine 4. The handle 18 is connected to the shaft pipe 12 near a longitudinal midpoint of the shaft pipe 12. The handle 18 is formed into a U-shape and is provided with grips at both ends of the U-shape.

The electric work machine 4 includes a trigger switch 19. The trigger switch 19 is attached to one of the grips of the handle 18. The trigger switch 19 is an operation switch for inputting a command to drive the motor 23. The trigger switch 19 includes a tactile switch to be turned on only while the operator is pressing it.

The shaft pipe 12 contains a not-shown driving force transmission shaft (hereinafter, referred to as transmission shaft) inside thereof. A first end of the transmission shaft is connected to a rotor of the later-described motor 23 contained in the motor unit 11. A second end of the transmission shaft is connected to the cutter 17 through not-shown two or more gears provided in the cutter attachment portion 16. Thus, the rotational driving force of the motor 23 is transmitted to the cutter 17 through the transmission shaft and the two or more gears.

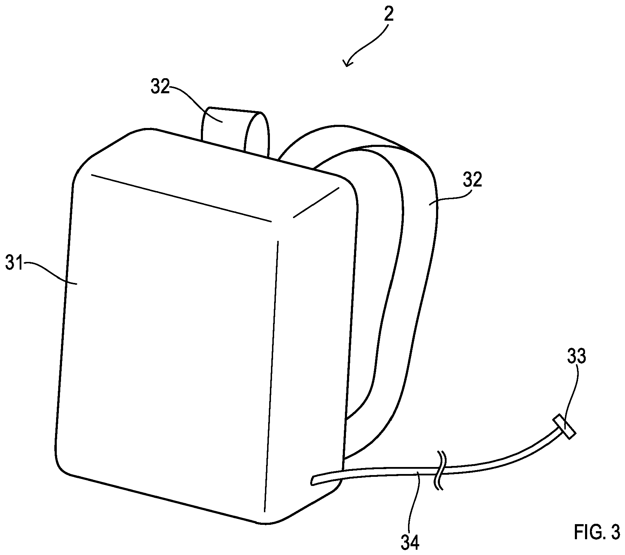

As shown in FIG. 3, the power-supply apparatus 2 includes a main body 31, a pair of shoulder straps 32, a power-supply connector 33, and a power cord 34.

The main body 31 is formed into a substantially rectangular parallelepiped shape and inculdes a built-in battery 50 that is described later.

The pair of shoulder straps 32 is attached to the main body 31 so that the operator can carry the main body 31 on the operator's back.

The power-supply connector 33 is a connector to be coupled to the dual port adapter 3. The power cord 34 couples the built-in battery 50 contained in the main body 31 and the power-supply connector 33 to each other.

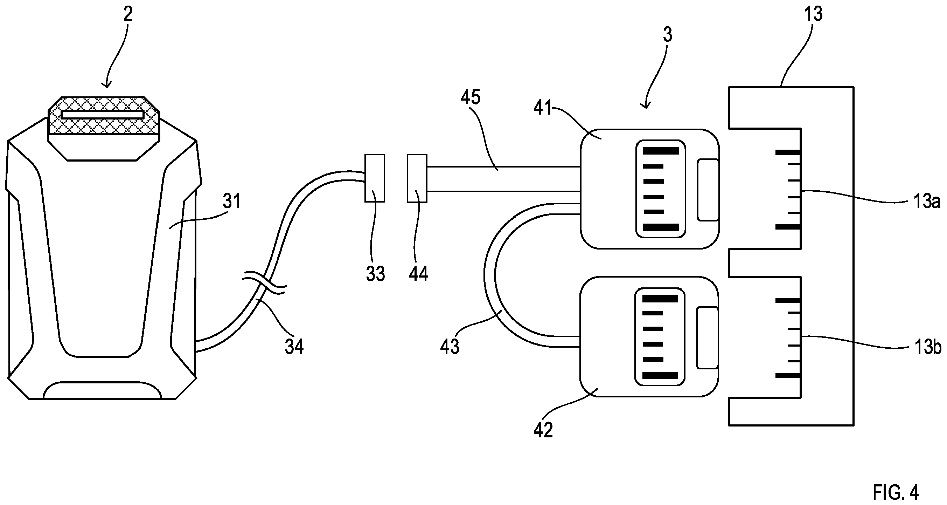

The dual port adapter 3 includes a first adapter 41, a second adapter 42, a relay code 43, an adapter connector 44, and an adapter code 45 as shown in FIG. 4.

The first adapter 41 is a device to output a first voltage (72 V in this embodiment) to the electric work machine 4.

The second adapter 42 is a device to output a second voltage (36 V in this embodiment) to the electric work machine 4.

The relay code 43 couples the first adapter 41 and the second adapter 42 to each other. The adapter connector 44 is a connector to be coupled to the power-supply connector 33. The adapter code 45 couples the adapter connector 44 and the first adapter 41 to each other.

The battery attachment portion 13 includes a first attachment portion 13a to which the first battery pack 21 is attached and a second attachment portion 13b to which the second battery pack 22 is attached. To the first attachment portion 13a, the first adapter 41 is detachably attached. To the second attachment portion 13b, the second adapter 42 is detachably attached.

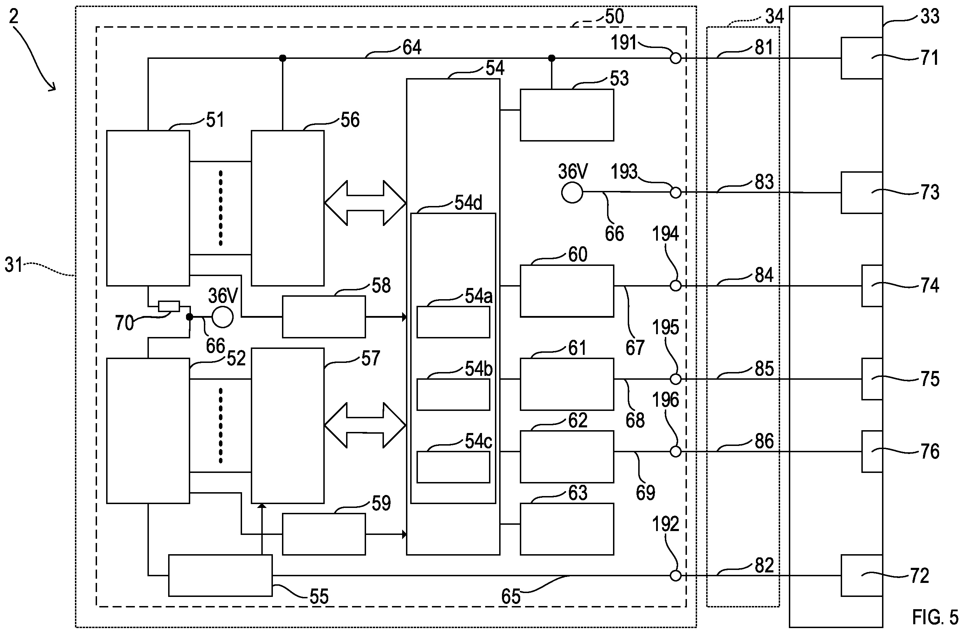

As shown in FIG. 5, the built-in battery 50 contained in the main body 31 of the power-supply apparatus 2 includes a first battery 51, a second battery 52, a power-supply circuit 53, a battery MPU 54, a first current detection circuit 55, a first AFE 56, a second AFE 57, a first temperature detector 58, a second temperature detector 59, a discharge controller 60, a battery communicator 61, an identifier 62, an indicator 63, a positive electrode line 64, a negative electrode line 65, an intermediate voltage line 66, a signal line 67, a communication line 68, an identification line 69, a second current detection circuit 70, and first through sixth terminals 191-196. The term "MPU" is an abbreviation of "Micro Processing Unit". The term "AFE" is an abbreviation of "Analog Front End".

The power-supply connector 33 includes a positive electrode terminal 71, a negative electrode terminal 72, an intermediate voltage terminal 73, a signal terminal 74, a communication terminal 75, and an identification terminal 76.

The power cord 34 includes a positive electrode line 81, a negative electrode line 82, an intermediate voltage line 83, a signal line 84, a communication line 85, and an identification line 86.

Each of the first battery 51 and the second battery 52 includes two or more rechargeable battery cells (not shown) coupled in series with each other. In this embodiment, the first battery 51 and the second battery 52 are lithium-ion batteries, each having a rated voltage of 36 V.

A positive electrode of the first battery 51 is coupled to the first terminal 191 through the positive electrode line 64. A negative electrode of the first battery 51 is coupled to a positive electrode of the second battery 52. A negative electrode of the second battery 52 is coupled to the second terminal 192 through the negative electrode line 65. A coupling point between the negative electrode of the first battery 51 and the positive electrode of the second battery 52 is coupled to the third terminal 193 through the intermediate voltage line 66.

The power-supply circuit 53 generates an internal voltage for operating various circuits including the battery MPU 54, the first AFE 56, and the second AFE 57 by receiving power supply from the first battery 51 and the second battery 52 through the positive electrode line 64.

The battery MPU 54 includes a microcomputer 54d including a CPU 54a, a ROM 54b and a RAM 54c. The microcomputer 54d performs its various functions by the CPU 54a executing a program stored in a non-transitory tangible storage medium. In this example, the ROM 54b corresponds to the non-transitory tangible storage medium storing a program. When the program runs, its corresponding method is performed. Note that some or all of the functions performed by the CPU 54a may be achieved by one or more electronic components, such as ICs. The battery MPU 54 may include one or more microcomputers.

The first current detection circuit 55 detects a value of an electric current flowing through the negative electrode line 65, and outputs, to the second AFE 57, a current detection signal indicating the detected current value.

The second current detection circuit 70 is disposed on a current path between the coupling point, which is placed between the negative electrode of the first battery 51 and the positive electrode of the second battery 52, and the negative electrode of the first battery 51 to detect an electric current of the first battery 51. The second current detection circuit 70 outputs, to the first AFE 56, a current detection signal indicating the detected current value.

The first AFE 56 and the second AFE 57 are analog circuits, and configured to be able to communicate with the battery MPU 54. The first AFE 56 and the second AFE 57 respectively detect a voltage of each rechargeable battery included in the first battery 51 and the second battery 52, and execute respective cell balancing processes in which the remaining energy of the two or more rechargeable batteries is equalized in accordance with a command from the battery MPU 54.

The first AFE 56 transmits, to the battery MPU 54, a digital signal indicating a detected voltage value of each rechargeable battery cell included in the first battery 51 and a digital signal indicating a current value detected by the second current detection circuit 70. The second AFE 57 transmits, to the battery MPU 54, a digital signal indicating a detected voltage value of each rechargeable battery cell included in the second battery 52 and a digital signal indicating a current value detected by the first current detection circuit 55.

The first temperature detector 58 and the second temperature detector 59 respectively detect a temperature of the first battery 51 and the second battery 52, and output respective temperature-detection signals indicating the detected battery temperature to the battery MPU 54.

The discharge controller 60 outputs a discharge permission signal or a discharge prohibition signal. The discharge controller 60 is coupled to the fourth terminal 194 through the signal line 67.

The battery communicator 61 performs a serial communication with the dual port adapter 3 based on a first communication protocol. The battery communicator 61 is coupled to the fifth terminal 195 through the communication line 68.

The identifier 62 obtains an adapter ID of the dual port adapter 3, and outputs the obtained adapter ID to the battery MPU 54. The identifier 62 is coupled to the sixth terminal 196 through the identification line 69.

The indicator 63 displays the remaining energy of the first battery 51 and the second battery 52 based on a command from the battery MPU 54.

The first terminal 191 is coupled to the positive electrode terminal 71 of the power-supply connector 33 through the positive electrode line 81. The second terminal 192 is coupled to the negative electrode terminal 72 of the power-supply connector 33 through the negative electrode line 82. The third terminal 193 is coupled to the intermediate voltage terminal 73 of the power-supply connector 33 through the intermediate voltage line 83. The fourth terminal 194 is coupled to the signal terminal 74 of the power-supply connector 33 through the signal line 84. The fifth terminal 195 is coupled to the communication terminal 75 of the power-supply connector 33 through the communication line 85. The sixth terminal 196 is coupled to the identification terminal 76 of the power-supply connector 33 through the identification line 86.

The battery MPU 54 determines whether the first battery 51 and the second battery 52 are in their respective dischargeable states based on the digital signals transmitted from the first AFE 56 and the second AFE 57 to the battery MPU 54 and based on the temperature-detection signals output from the first temperature detector 58 and the second temperature detector 59 to the battery MPU 54. When the first battery 51 and the second battery 52 are in their dischargeable states, the battery MPU 54 outputs, to the discharge controller 60, the discharge permission signal permitting a discharge from the first battery 51 and the second battery 52. When the first battery 51 and the second battery 52 are not in their dischargeable states, the battery MPU 54 outputs, to the discharge controller 60, the discharge prohibition signal prohibiting the discharge from the first battery 51 and the second battery 52. The discharge controller 60 outputs, to the dual port adapter 3 through the signal line 84 and the signal terminal 74, the discharge permission signal or the discharge prohibition signal received from the battery MPU 54.

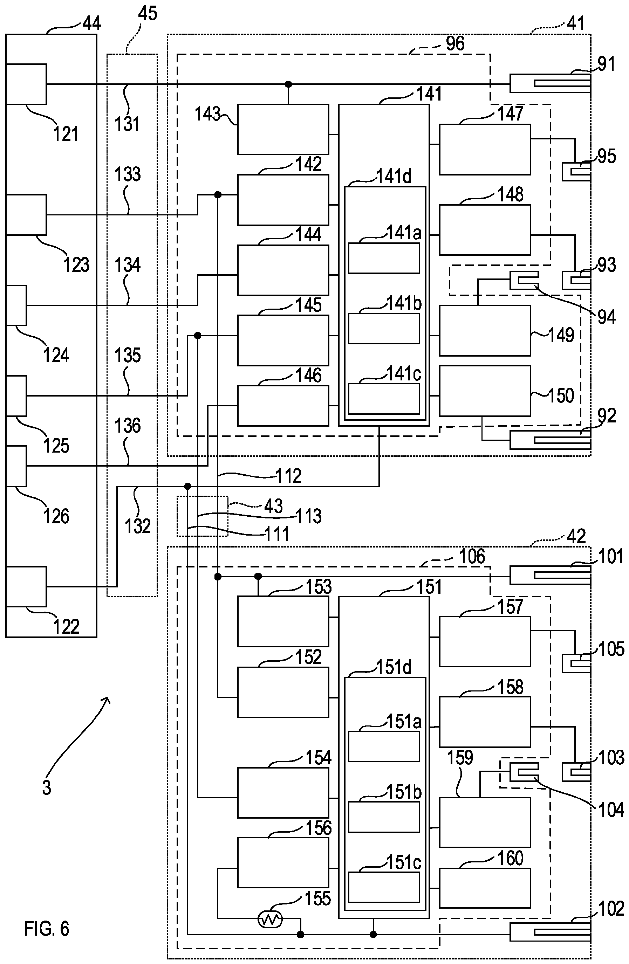

As shown in FIG. 6, the first adapter 41 of the dual port adapter 3 includes a positive electrode terminal 91, a negative electrode terminal 92, a signal terminal 93, a communication terminal 94, a detection terminal 95, and an internal circuit 96.

The second adapter 42 of the dual port adapter 3 includes a positive electrode terminal 101, a negative electrode terminal 102, a signal terminal 103, a communication terminal 104, a detection terminal 105, and an internal circuit 106.

The relay code 43 of the dual port adapter 3 includes a negative electrode line 111, an intermediate voltage line 112, and a communication line 113.

The adapter connector 44 of the dual port adapter 3 includes a positive electrode terminal 121, a negative electrode terminal 122, an intermediate voltage terminal 123, a signal terminal 124, a communication terminal 125, and an identification terminal 126. Coupling the adapter connector 44 to the power-supply connector 33 causes the positive electrode terminal 121, the negative electrode terminal 122, the intermediate voltage terminal 123, the signal terminal 124, the communication terminal 125, and the identification terminal 126 to be respectively coupled to the positive electrode terminal 71, the negative electrode terminal 72, the intermediate voltage terminal 73, the signal terminal 74, the communication terminal 75, and the identification terminal 76.

The adapter code 45 of the dual port adapter 3 includes a positive electrode line 131, a negative electrode line 132, an intermediate voltage line 133, a signal line 134, a communication line 135, and an identification line 136.

The internal circuit 96 includes a first adapter MPU 141, a power supply circuit 142, a voltage detector 143, a discharge controller 144, an adapter communicator 145, an identifier 146, a device coupling detector 147, a discharge controller 148, an adapter communicator 149, and a coupling detector 150.

The internal circuit 106 includes a second adapter MPU 151, a power supply circuit 152, a voltage detector 153, an adapter communicator 154, a thermistor 155, a temperature detector 156, a device coupling detector 157, a discharge controller 158, an adapter communicator 159, and an indicator 160.

The positive electrode terminal 91 of the first adapter 41 is coupled to the positive electrode terminal 121 of the adapter connector 44 through the positive electrode line 131. The negative electrode terminal 92 is coupled to the coupling detector 150. The signal terminal 93 is coupled to the discharge controller 148. The communication terminal 94 is coupled to the adapter communicator 149. The detection terminal 95 is coupled to the device coupling detector 147.

The positive electrode terminal 101 of the second adapter 42 is coupled to the intermediate voltage terminal 123 through the intermediate voltage line 112 and the intermediate voltage line 133. The negative electrode terminal 102 is coupled to the negative electrode terminal 122 through the negative electrode line 111 and the negative electrode line 132. The signal terminal 103 is coupled to the discharge controller 158. The communication terminal 104 is coupled to the adapter communicator 159. The detection terminal 105 is coupled to the device coupling detector 157.

The negative electrode terminal 122 is coupled to the first adapter MPU 141 through the negative electrode line 132.

The intermediate voltage terminal 123 is coupled to the power-supply circuit 142 through the intermediate voltage line 133. The intermediate voltage terminal 123 is coupled to the power-supply circuit 152 through the intermediate voltage line 133 and the intermediate voltage line 112.

The signal terminal 124 is coupled to the discharge controller 144 through the signal line 134.

The communication terminal 125 is coupled to the adapter communicator 145 through the communication line 135. The communication terminal 125 is coupled to the adapter communicator 154 through the communication line 135 and the communication line 113.

The identification terminal 126 is coupled to the identifier 146 through the identification line 136.

The first adapter MPU 141 includes a microcomputer 141d including a CPU 141a, a ROM 141b, and a RAM 141c. The microcomputer 141d performs its various functions by the CPU 141a executing a program stored in a non-transitory tangible storage medium. In this example, the ROM 141b corresponds to the non-transitory tangible storage medium storing a program. When the program runs, its corresponding method is performed. Note that some or all of the functions performed by the CPU 141a may be achieved by one or more electronic components, such as ICs. The first adapter MPU 141 may include one or more microcomputers.

The power-supply circuit 142 generates an internal voltage for operating various circuits including the first adapter MPU 141 by receiving power supply from the first battery 51 and the second battery 52 through the intermediate voltage line 133.

The voltage detector 143 detects a voltage value of the positive electrode line 131 and outputs, to the first adapter MPU 141, a voltage detection signal indicating the detected voltage value.

The discharge controller 144 outputs, to the first adapter MPU 141, the discharge permission signal or the discharge prohibition signal input through the signal terminal 124 and the signal line 134.

The adapter communicator 145 performs a serial communication with the battery communicator 61 through the communication terminal 125 and the communication line 135 based on the first communication protocol.

The identifier 146 outputs the adapter ID of the dual port adapter 3 to the power-supply apparatus 2 through the identification line 136 and the identification terminal 126.

The device coupling detector 147 detects whether the electric work machine 4 is coupled based on a voltage of the detection terminal 95, and outputs a coupling detection signal indicating the detection result to the first adapter MPU 141.

The discharge controller 148 outputs, to the electric work machine 4 through the signal terminal 93, a discharge permission signal or a discharge prohibition signal input from the first adapter MPU 141.

The adapter communicator 149 performs a serial communication with the electric work machine 4 through the communication terminal 94 based on a second communication protocol. The second communication protocol is a communication protocol in which the volume of communication data is larger than that in the first communication protocol.

The coupling detector 150 detects whether the first adapter 41 and the second adapter 42 are coupled to the electric work machine 4 based on the voltage of the negative electrode terminal 92, and outputs, to the first adapter MPU 141, a coupling detection signal indicating the detection result.

The second adapter MPU 151 includes a microcomputer 151d including a CPU 151a, a ROM 151b, and a RAM 151c. The microcomputer 151d preforms its various functions by the CPU 151a executing a program stored in a non-transitory tangible storage medium. In this example, the ROM 151b corresponds to the non-transitory tangible storage medium storing a program. When the program runs, its corresponding method is performed. Note that some or all of the functions performed by the CPU 151a may be achieved by one or more electronic components, such as ICs. The second adapter MPU 151 may include one or more microcomputers.

The power-supply circuit 152 generates an internal voltage for operating various circuits including the second adapter MPU 151 by receiving power supply from the second battery 52 through the intermediate voltage line 133 and the intermediate voltage line 112.

The voltage detector 153 detects a voltage value of the intermediate voltage line 112 and outputs a voltage detection signal indicating the detected voltage value to the second adapter MPU 151.

The adapter communicator 154 performs a serial communication with the battery communicator 61 through the communication terminal 125, the communication line 135, and the communication line 113 based on the first communication protocol. The adapter communicator 154 also performs a serial communication with the adapter communicator 145 through the communication line 113 based on the first communication protocol.

The thermistor 155 is disposed near the negative electrode line 111. A first end of the thermistor 155 is coupled to the negative electrode line 111 and a second end of the thermistor 155 is coupled to the temperature detector 156.

The temperature detector 156 calculates the temperature of the negative electrode line 111 by detecting a resistance value of the thermistor 155, and outputs a temperature-detection signal indicating the calculated temperature to the second adapter MPU 151.

The device coupling detector 157 detects whether the electric work machine 4 is coupled based on the voltage of the detection terminal 105, and outputs, to the second adapter MPU 151, a coupling detection signal indicating the detection result.

The discharge controller 158 outputs, to the electric work machine 4 through the signal terminal 103, a discharge permission signal or a discharge prohibition signal input from the second adapter MPU 151.

The adapter communicator 159 performs a serial communication with the electric work machine 4 through the communication terminal 104 based on the second communication protocol.

The indicator 160 displays the remaining energy of the first battery 51 and the second battery 52 based on a command from the second adapter MPU 151. The second adapter MPU 151 receives remaining energy information indicating the remaining energy of the first battery 51 and the second battery 52 from the battery MPU 54 and, based on the received remaining energy information, the second adapter MPU 151 causes the indicator 160 to display the remaining energy of the first battery 51 and the second battery 52.

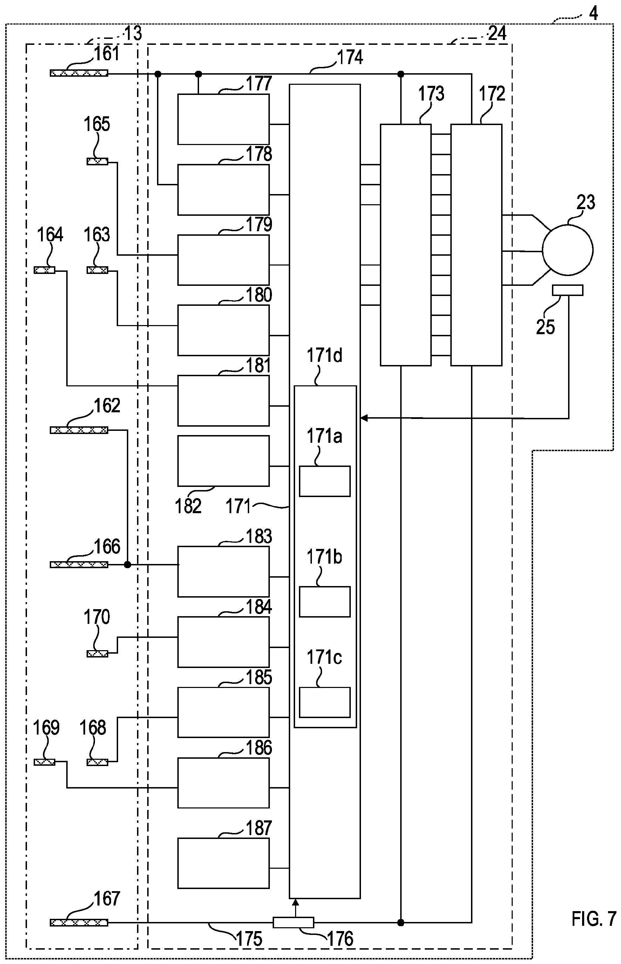

As shown in FIG. 7, the electric work machine 4 includes a motor 23, a control unit 24, and a rotation sensor 25. In this embodiment, the motor 23 is a three-phase brushless motor.

The battery attachment portion 13 includes a positive electrode terminal 161, a negative electrode terminal 162, a signal terminal 163, a communication terminal 164, a detection terminal 165, a positive electrode terminal 166, a negative electrode terminal 167, a signal terminal 168, a communication terminal 169, and a detection terminal 170.

Attaching the first adapter 41 to the first attachment portion 13a causes the positive electrode terminal 161, the negative electrode terminal 162, the signal terminal 163, the communication terminal 164 and the detection terminal 165 to be respectively coupled to the positive electrode terminal 91, the negative electrode terminal 92, the signal terminal 93, the communication terminal 94, and the detection terminal 95. Attaching the second adapter 42 to the second attachment portion 13b causes the positive electrode terminal 166, the negative electrode terminal 167, the signal terminal 168, the communication terminal 169 and the detection terminal 170 to be respectively coupled to the positive electrode terminal 101, the negative electrode terminal 102, the signal terminal 103, the communication terminal 104, and the detection terminal 105.

The control unit 24 includes a work machine MPU 171, a drive circuit 172, a gate circuit 173, a positive electrode line 174, a negative electrode line 175, a current detection circuit 176, a power-supply circuit 177, a voltage detector 178, a battery detector 179, a discharge controller 180, a work machine communicator 181, an indicator 182, a voltage detector 183, a battery detector 184, a discharge controller 185, a work machine communicator 186, and an indicator 187.

The positive electrode terminal 161 is coupled to the drive circuit 172 and the gate circuit 173 through the positive electrode line 174. The negative electrode terminal 162 is coupled to the voltage detector 183. The signal terminal 163 is coupled to the discharge controller 180. The communication terminal 164 is coupled to the work machine communicator 181. The detection terminal 165 is coupled to the battery detector 179. The positive electrode terminal 166 is coupled to the voltage detector 183. The negative electrode terminal 167 is coupled to the drive circuit 172 and the gate circuit 173 through the negative electrode line 175. The signal terminal 168 is coupled to the discharge controller 185. The communication terminal 169 is coupled to the work machine communicator 186. The detection terminal 170 is coupled to the battery detector 184.

The work machine MPU 171 includes a microcomputer 171d including a CPU 171a, a ROM 171b and a RAM 171c. The microcomputer 171d preforms its various functions by the CPU 171a executing a program stored in a non-transitory tangible storage medium. In this example, the ROM 171b corresponds to the non-transitory tangible storage medium storing a program. When the program runs, its corresponding method is performed. Note that some or all of the functions performed by the CPU 171a may be achieved by one or more electronic components, such as ICs. The work machine MPU 171 may include one or more microcomputers.

The drive circuit 172 is a circuit that receives power supply from the power-supply apparatus 2 and delivers electric currents to respective phase windings of the motor 23. In this embodiment, the drive circuit 172 is in the form of a three-phase full-bridge circuit including not-shown six switching devices.

In accordance with a control signal output from the work machine MPU 171, the gate circuit 173 turns on/off the individual switching devices in the drive circuit 172 to deliver electric currents to the respective phase windings of the motor 23, thereby rotating the motor 23.

The current detection circuit 176 detects a value of an electric current flowing through the negative electrode line 175 (i.e., an electric current flowing through the motor 23), and outputs a current detection signal indicating the detected current value to the work machine MPU 171.

The power-supply circuit 177 generates an internal voltage for operating various circuits including the work machine MPU 171 by receiving power supply from the first battery 51 and the second battery 52 through the positive electrode line 174.

The voltage detector 178 detects a voltage value of the positive electrode line 174 and outputs a voltage detection signal indicating the detected voltage value to the work machine MPU 171.

The battery detector 179 detects, based on the voltage of the detection terminal 165, whether the built-in battery 50 is coupled through the dual port adapter 3, and outputs, to the work machine MPU 171, a battery detection signal indicating the detection result.

The discharge controller 180 outputs, to the work machine MPU 171, a discharge permission signal or a discharge prohibition signal input through the signal terminal 163.

The work machine communicator 181 performs a serial communication with the adapter communicator 149 through the communication terminal 164 based on the second communication protocol.

The indicator 182 displays the remaining energy of the first battery 51 based on a command from the work machine MPU 171. The work machine MPU 171 receives remaining energy information indicating the remaining energy of the first battery 51 from the first adapter MPU 141 and causes the indicator 182 to display the remaining energy of the first battery 51 based on the received remaining energy information.

The voltage detector 183 detects voltage values of the negative electrode terminal 162 and the positive electrode terminal 166 and outputs a voltage detection signal indicating the detected voltage values to the work machine MPU 171.

The battery detector 184 detects, based on the voltage of the detection terminal 170, whether the built-in battery 50 is coupled through the dual port adapter 3, and outputs a battery detection signal indicating the detection result to the work machine MPU 171.

The discharge controller 185 outputs, to a work machine MPU 171, a discharge permission signal or a discharge prohibition signal input through the signal terminal 168.

The work machine communicator 186 performs a data communication with the adapter communicator 159 through the communication terminal 169.

The indicator 187 displays the remaining energy of the second battery 52 based on a command from the work machine MPU 171. The work machine MPU 171 receives remaining energy information indicating the remaining energy of the second battery 52 from the second adapter MPU 151 and causes the indicator 187 to display the remaining energy of the second battery 52 based on the received remaining energy information.

The rotation sensor 25 detects a rotational position and a rotational frequency of the motor 23 and outputs a rotation detection signal indicating the detected result thereof to the work machine MPU 171.

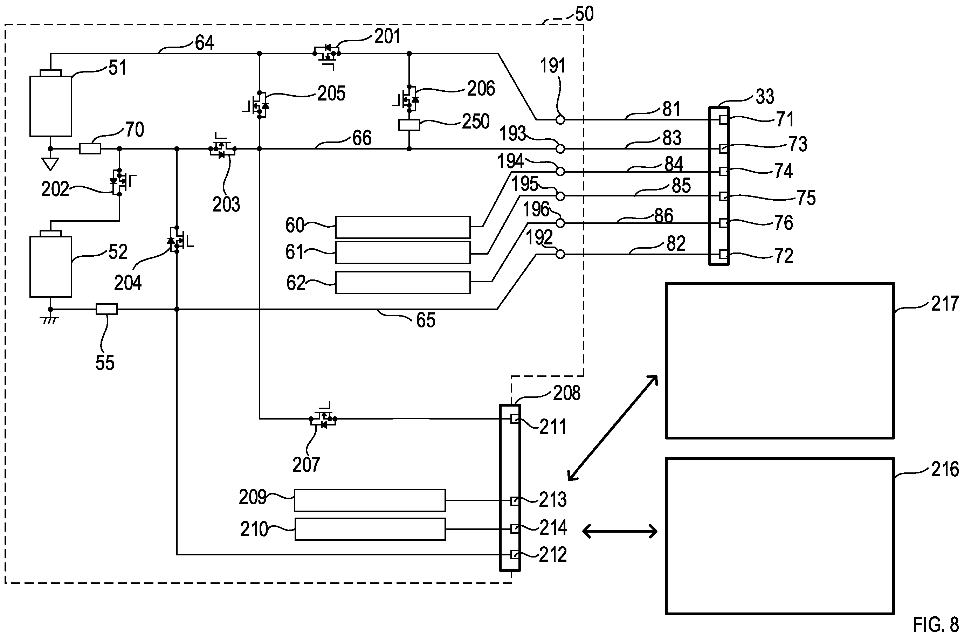

As shown in FIG. 8, the built-in battery 50 includes first through sixth terminals 191-196, first through seventh transistors 201-207, a charging connector 208, a charging communicator 209, a charging identifier 210, and a 18 V voltage converter circuit 250.

The charging connector 208 includes a positive electrode terminal 211, a negative electrode terminal 212, a communication terminal 213, and an identification terminal 214.

The positive electrode terminal 211 is coupled to the positive electrode of the first battery 51 through the fifth transistor 205 and the seventh transistor 207. The positive electrode terminal 211 is coupled to the negative electrode of the first battery 51 through the third transistor 203 and the seventh transistor 207. The positive electrode terminal 211 is coupled to the positive electrode of the second battery 52 through the second transistor 202, the third transistor 203, and the seventh transistor 207.

The negative electrode terminal 212 is coupled to the negative electrode of the first battery 51 through the fourth transistor 204. The negative electrode terminal 212 is coupled to the negative electrode of the second battery 52.

The communication terminal 213 is coupled to the charging communicator 209. The identification terminal 214 is coupled to the charging identifier 210.

The charging communicator 209 performs a data communication with a battery checker 216 through the communication terminal 213 when the battery checker 216 for diagnosing the built-in battery 50 by obtaining information from the built-in battery 50 is coupled to the charging connector 208. The charging communicator 209 also performs a data communication with a charger 217 through the communication terminal 213 when the charger 217 for charging the built-in battery 50 is coupled to the charging connector 208.

When the battery checker 216 is coupled to the charging connector 208, the charging identifier 210 obtains a checker ID from the battery checker 216 through the identification terminal 214, and outputs the obtained checker ID to the battery MPU 54.

The first terminal 191 is coupled to the positive electrode terminal 71 of the power-supply connector 33 through the positive electrode line 81. The first terminal 191 is coupled to the positive electrode of the first battery 51 through the first transistor 201.

The second terminal 192 is coupled to the negative electrode terminal 72 through the negative electrode line 82. The second terminal 192 is coupled to the negative electrode of the second battery 52.

The third terminal 193 is coupled to the intermediate voltage terminal 73 through the intermediate voltage line 83. The third terminal 193 is coupled to the negative electrode of the first battery 51 through the third transistor 203.

The fourth terminal 194 is coupled to the signal terminal 74 through the signal line 84. The fifth terminal 195 is coupled to the communication terminal 75 through the communication line 85. The sixth terminal 196 is coupled to the identification terminal 76 through the identification line 86.

The first through seventh transistors 201-207 in this embodiment are in the form of N-channel metal-oxide semiconductor field-effect transistor (MOSFET).

In the first transistor 201, its drain is coupled to the positive electrode of the first battery 51 and its source is coupled to the first terminal 191.

In the second transistor 202, its drain is coupled to the positive electrode of the second battery 52 and its source is coupled to the negative electrode of the first battery 51.

In the third transistor 203, its drain is coupled to the third terminal 193 and its source is coupled to the negative electrode of the first battery 51.

In the fourth transistor 204, its drain is coupled to the negative electrode of the first battery 51 and its source is coupled to the negative electrode of the first battery 51 and the negative electrode terminal 212 of the charging connector 208.

In the fifth transistor 205, its drain is coupled to the positive electrode of the first battery 51 and its source is coupled to the third terminal 193.

In the sixth transistor 206, its drain is coupled to the first terminal 191 and its source is coupled to the third terminal 193.

In the seventh transistor 207, its drain is coupled to the third terminal 193 and its source is coupled to the positive electrode terminal 211 of the charging connector 208.

The 18 V voltage converter circuit 250 is disposed on a current path between the source of the sixth transistor 206 and the third terminal 193, and is configured to generate a voltage of 18 V.

When a voltage of 72 V is output from the built-in battery 50, the battery MPU 54 switches the first through third transistors 201-203 to their respective ON-states and switches the fourth through seventh transistors 204-207 to their respective OFF-states.

When a voltage of 36 V is output from the first battery 51, the battery MPU 54 switches the fourth through sixth transistors 204-206 to their respective ON-states, and switches the first transistor 201, the second transistor 202, the third transistor 203, and the seventh transistor 207 to their respective OFF-states.

When a voltage of 36 V is output from the second battery 52, the battery MPU 54 switches the second transistor 202, the third transistor 203 and the sixth transistor 206 to their respective ON-states and switches the first transistor 201, the fourth transistor 204, the fifth transistor 205 and the seventh transistor 207 to their respective OFF-states.

When the first battery 51 is charged by coupling the charger 217 to the charging connector 208, the battery MPU 54 switches the fourth, the fifth, and the seventh transistors 204, 205, and 207 to their respective ON-states and switches the first through third, the sixth transistors 201-203, and 206 to their respective OFF-states.

When the second battery 52 is charged by coupling the charger 217 to the charging connector 208, the battery MPU 54 switches the second transistor 202, the third transistor 203, and the seventh transistor 207 to their respective ON-states and switches the first transistor 201, the fourth transistor 204, the fifth transistor 205, and the sixth transistor 206 to their respective OFF-states.

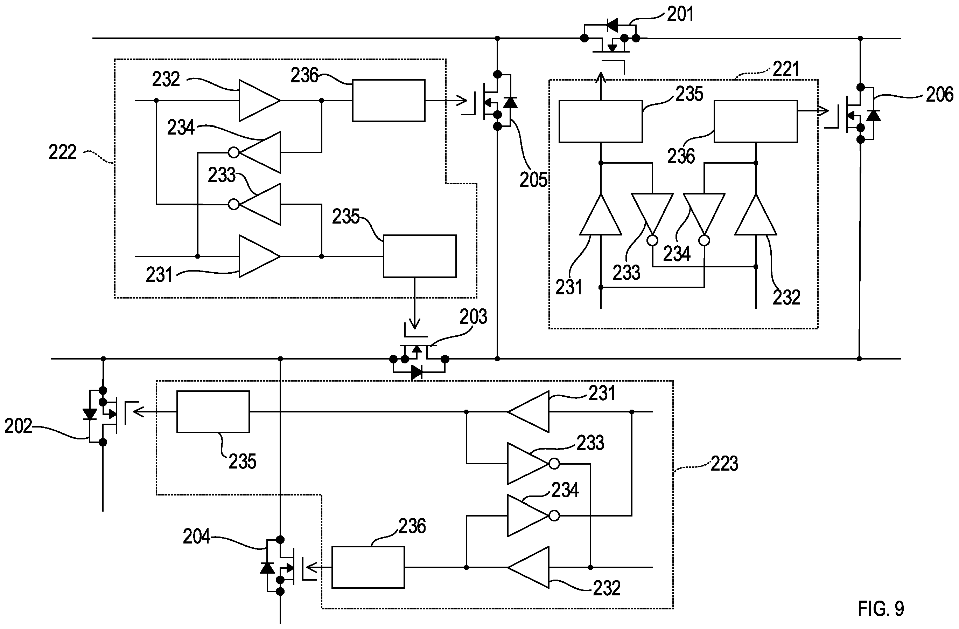

As shown in FIG. 9, the built-in battery 50 includes first through third interlock circuits 221-223.

The first interlock circuit 221 includes a first buffer 231, a second buffer 232, a first NOT circuit 233, a second NOT circuit 234, a first voltage application circuit 235, and a second voltage application circuit 236.

The first voltage application circuit 235 and the second voltage application circuit 236 each include a voltage input terminal and a voltage output terminal. When a voltage of each voltage input terminal becomes high-level, the first voltage application circuit 235 and the second voltage application circuit 236 output, from each voltage output terminal, a high-level voltage capable of switching the first through sixth transistors 201-206 to their respective ON-states. When the voltage of each voltage input terminal becomes low-level, the first voltage application circuit 235 and the second voltage application circuit 236 output, from each voltage output terminal, a low-level voltage capable of switching the first through sixth transistors 201-206 to their respective OFF-states.

An output terminal of the first buffer 231 is coupled to the voltage input terminal of the first voltage application circuit 235 and an input terminal of the first NOT circuit 233. An output terminal of the second buffer 232 is coupled to the voltage input terminal of the second voltage application circuit 236 and an input terminal of the second NOT circuit 234.

An output terminal of the first NOT circuit 233 is coupled to an input terminal of the second buffer 232. An output terminal of the second NOT circuit 234 is coupled to an input terminal of the first buffer 231.

The voltage output terminal of the first voltage application circuit 235 is coupled to the gate of the first transistor 201. The voltage output terminal of the second voltage application circuit 236 is coupled to the gate of the sixth transistor 206.

In the first interlock circuit 221 thus configured, when a high-level voltage is applied to the input terminal of the first buffer 231 in order to switch the first transistor 201 to its ON-state, the high-level voltage is output from the output terminal of the first buffer 231, and the first transistor 201 is switched to its ON-state. The output of the high-level voltage from the output terminal of the first buffer 231 causes a low-level voltage to be output from the output terminal of the first NOT circuit 233. This causes a low-level voltage to be output from the output terminal of the second buffer 232, and the sixth transistor 206 is switched to its OFF-state. Similarly, when a low-level voltage is applied to the input terminal of the first buffer 231 in order to switch the first transistor 201 to its OFF-state, the first transistor 201 is switched to its OFF state and the sixth transistor 206 is switched to its ON state. Therefore, the first interlock circuit 221 makes it possible to avoid the first transistor 201 and the sixth transistor 206 from being in their respective ON-states simultaneously.

When the first transistor 201 is switched from its ON-state (i.e., the sixth transistor 206 is in its OFF-state) to its OFF-state (i.e., the sixth transistor 206 is in its ON-state), a high-level voltage is firstly applied to the input terminal of the second buffer 232, and then a low-level voltage is applied to the input terminal of the first buffer 231.

The second interlock circuit 222 includes, similarly to the first interlock circuit 221, a first buffer 231, a second buffer 232, a first NOT circuit 233, a second NOT circuit 234, a first voltage application circuit 235, a second voltage application circuit 236. However, a voltage output terminal of the first voltage application circuit 235 of the second interlock circuit 222 is coupled to the gate of the third transistor 203. A voltage output terminal of the second voltage application circuit 236 of the second interlock circuit 222 is coupled to the gate of the fifth transistor 205. The second interlock circuit 222 thus configured makes it possible to avoid the third transistor 203 and the fifth transistor 205 from being in their respective ON-states simultaneously.

The third interlock circuit 223 includes, similarly to the first interlock circuit 221, a first buffer 231, a second buffer 232, a first NOT circuit 233, a second NOT circuit 234, a first voltage application circuit 235, and a second voltage application circuit 236. However, a voltage output terminal of the first voltage application circuit 235 of the third interlock circuit 223 is coupled to the gate of the second transistor 202. A voltage output terminal of the second voltage application circuit 236 of the third interlock circuit 223 is coupled to the gate of the fourth transistor 204. The third interlock circuit 223 thus configured makes it is possible to avoid the second transistor 202 and the fourth transistor 204 from being in their respective ON-states simultaneously.

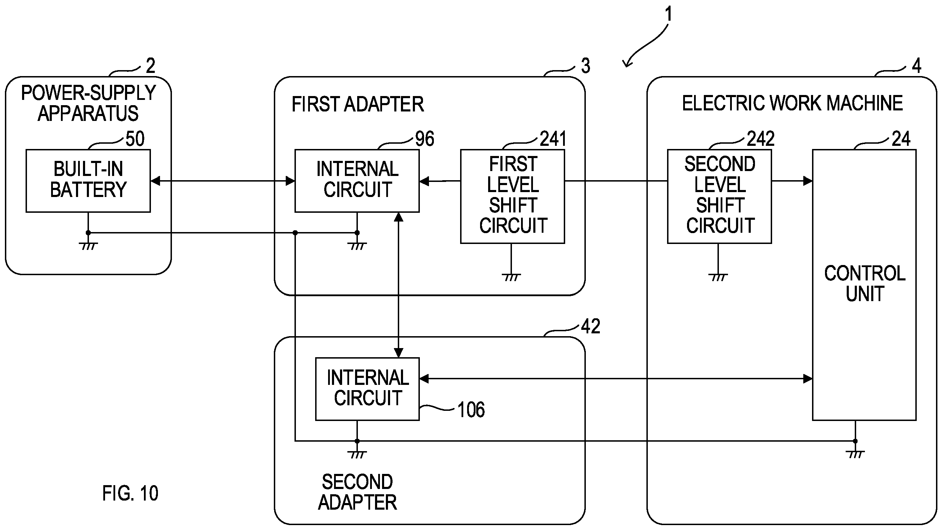

As shown in FIG. 10, the ground of the built-in battery 50 of the power-supply apparatus 2, the ground of the internal circuit 96 of the first adapter 41, the ground of the internal circuit 106 of the second adapter 42, and the ground of the control unit 24 of the electric work machine 4 have the identical electric potential. Specifically, the ground of the battery MPU 54 in the power-supply apparatus 2, the ground of the first adapter MPU 141 in the first adapter 41, the ground of the second adapter MPU 151 in the second adapter 42, and the ground of the work machine MPU 171 in the electric work machine 4 have the identical electric potential.

The first adapter 41 includes a first level shift circuit 241, and the electric work machine 4 includes a second level shift circuit 242.

The first level shift circuit 241 raises a voltage level of the digital signal output from the adapter communicator 149 in the internal circuit 96 by a certain voltage and outputs it to the second level shift circuit 242. The second level shift circuit 242 lowers the voltage level of the digital signal output from the first level shift circuit 241 by a certain voltage and outputs it to the work machine communicator 181 in the electric work machine 4.

The second level shift circuit 242 raises a voltage level of the digital signal output from the work machine communicator 181 in the electric work machine 4 by a certain voltage, and outputs it to the first level shift circuit 241. Then, the first level shift circuit 241 lowers the voltage level of the digital signal output from the second level shift circuit 242 by a certain voltage and outputs it to the adapter communicator 149 in the internal circuit 96.

Next, a description is made of a process of an adapter coupling control process executed by the first and second adapters 41, and 42. The adapter coupling control process starts when the first and second adapters MPU 141 and 151 activate.

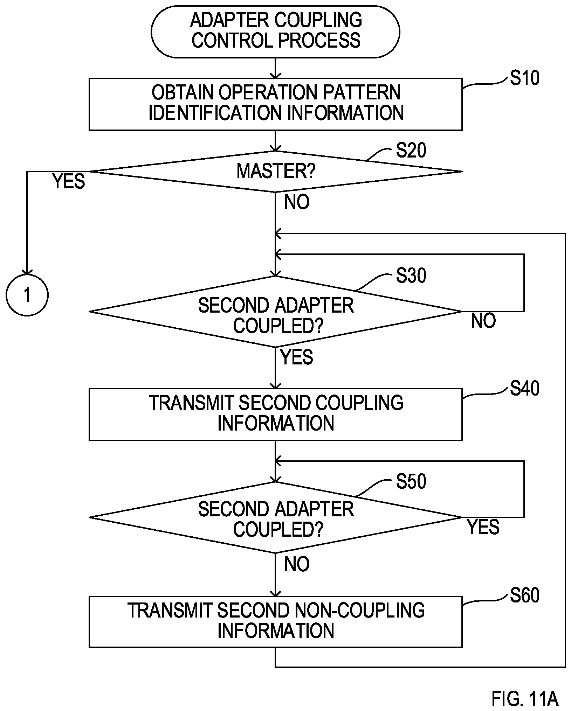

When the adapter coupling control process is executed, as shown in FIG. 11A, the CPUs 141a and 151a of the first and second adapter MPUs 141 and 151 firstly in S10 obtain operation pattern identification information stored in advance. The operation pattern identification information indicates a master or a slave. In this embodiment, the operation pattern identification information is stored, for example, in the ROMs 141b and 151b. The operation pattern identification information stored in the ROM 141b indicates a master, and the operation pattern identification information stored in the ROM 151b indicates a slave.

Then, in S20, the CPUs 141a and 151a determine whether the subject adapter is a master based on the obtained operation pattern identification information. Here, if the subject adapter is not a master, the CPUs 141a and 151a proceeds to S30. Note that in this embodiment, since the second adapter 42 is a slave, the processes of S30 through S60 described later are executed by the CPU 151a.

Upon proceeding to S30, the CPU 151a determines, based on a coupling detection signal from the device coupling detector 157, whether the second adapter 42 has been coupled to the second attachment portion 13b of the electric work machine 4. Here, when the second adapter 42 is not coupled, the CPU 151a waits until the second adapter 42 becomes coupled while repeating the process of S30. When the second adapter 42 becomes coupled, in S40, the CPU 151a transmits, to the first adapter 41, second coupling information indicating that the second adapter 42 has been coupled.

Furthermore, in S50, as in the same manner as described in S30, the CPU 151a determines whether the second adapter 42 has been coupled to the second attachment portion 13b of the electric work machine 4. Here, when the second adapter 42 is coupled, the CPU 151a waits until the second adapter 42 becomes not coupled to the second attachment portion 13b while repeating the process of S50. When the second adapter 42 becomes not coupled to the second attachment portion 13b, in S60, the CPU 151a transmits, to the first adapter 41, second non-coupling information indicating that the second adapter 42 is not coupled, and proceeds to S30.

In S20, when the subject adapter is a master, the CPUs 141a and 151a proceed to S70. Note that in this embodiment, since the first adapter 41 is a master, the processes of S70 through S140 described later are executed by the CPU 141a.

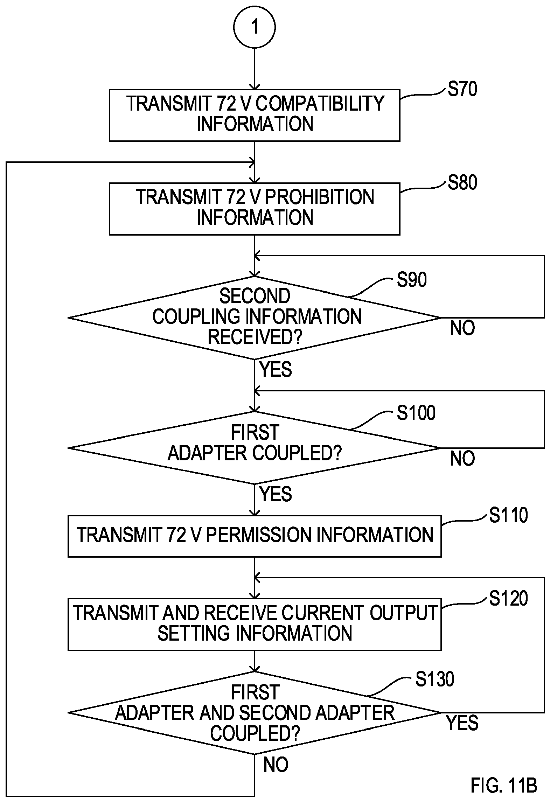

As shown in FIG. 11B, upon proceeding to S70, the CPU 141a transmits 72 V compatibility information to the power-supply apparatus 2, indicating that the dual port adapter 3 is compatible with the voltage of 72 V.

In S80, the CPU 141a then transmits 72 V prohibition information to the power-supply apparatus 2, indicating that the output of the voltage of 72 V is prohibited.

In S90, the CPU 141a determines whether the second coupling information has been received from the second adapter 42. Here, when the second coupling information has not been received, the CPU 141a waits until it receives the second coupling information while repeating the process of S90. Upon receipt of the second coupling information, in S100, the CPU 141a determines whether the first adapter 41 has been coupled to the first attachment portion 13a of the electric work machine 4 based on a coupling detection signal from the coupling detector 150. Here, when the first adapter 41 is not coupled, the CPU 141a waits until the first adapter 41 becomes coupled while repeating the process of S100.

When the first adapter 41 becomes coupled, in S110, the CPU 141a transmits 72 V permission information to the power-supply apparatus 2, indicating that the output of the voltage of 72 V is permitted.

Then, the CPU 141a transmits and receives current output setting information in S120. Specifically, upon receipt of the current output setting information from the electric work machine 4, the CPU 141a transmits the received current output setting information to the power-supply apparatus 2. Upon receipt of the current output setting information from the first adapter 41, the battery MPU 54 of the power-supply apparatus 2 sets an upper limit of the electric current output from the power-supply apparatus 2 to a current value indicated by the current output setting information.

In S130, the CPU 141a determines whether the first adapter 41 and the second adapter 42 are coupled to the electric work machine 4. Specifically, the CPU 141a determines whether the first adapter 41 is coupled based on the coupling detection signal from the device coupling detector 147, and determines whether the second adapter 42 is coupled based on the second coupling information and the second non-coupling information from the second adapter 42.

Here, when the first adapter 41 and the second adapter 42 are coupled to the electric work machine 4, the CPU 141a proceeds to S120. On the other hand, when at least one of the first adapter 41 and the second adapter 42 is not coupled to the electric work machine 4, the CPU 141a proceeds to S80.

Next, a description is made of a procedure of a battery coupling control process executed by the power-supply apparatus 2. The battery coupling control process starts when the battery MPU 54 activates.

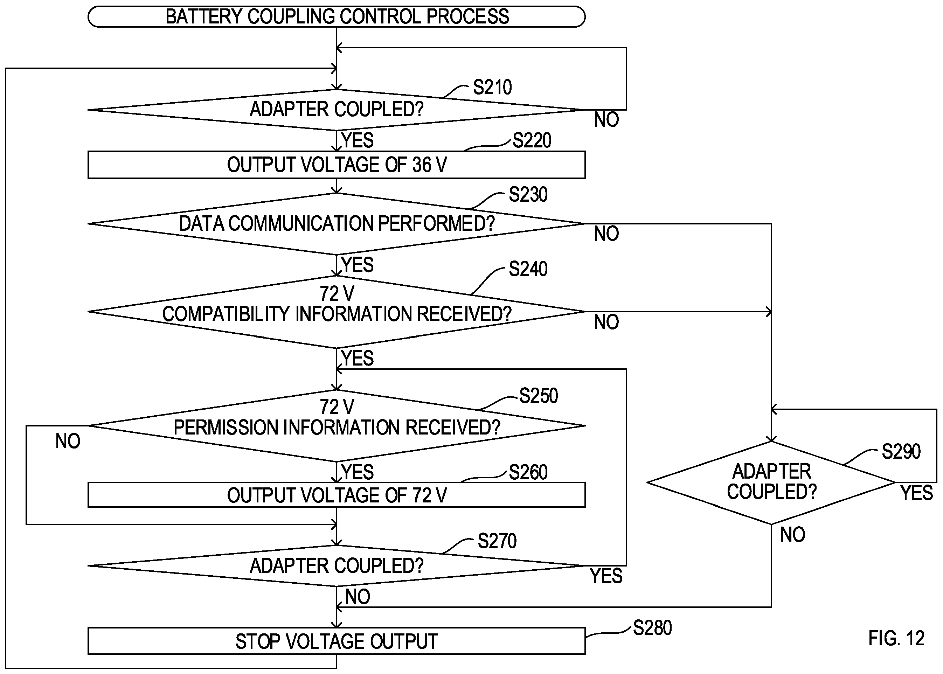

When the battery coupling control process is executed, as shown in FIG. 12, the CPU 54a of the battery MPU 54 firstly determines whether the dual port adapter 3 is coupled to the power-supply apparatus 2 in S210. Specifically, the CPU 54a determines that the dual port adapter 3 is coupled to the power-supply apparatus 2 when the CPU 54a has obtained an adapter ID through the identifier 62.

Here, when the dual port adapter 3 is not coupled to the power-supply apparatus 2, the CPU 54a waits until the dual port adapter 3 becomes coupled to the power-supply apparatus 2 while repeating the process of S210.

When the dual port adapter 3 becomes coupled to the power-supply apparatus 2, the CPU 54a outputs a voltage of 36 V in S220. Specifically, in order to output a voltage of 36 V from the first battery 51, the CPU 54a switches the fourth transistor 204, the fifth transistor 205, and the sixth transistor 206 to their respective ON-states and switches the first transistor 201, the second transistor 202, the third transistor 203, and the seventh transistor 207 to their respective OFF-states. Note that in order to output a voltage of 36 V from the second battery 52, the CPU 54a may switch the second transistor 202, the third transistor 203, and the sixth transistor 206 to their respective ON-states and may switch the first transistor 201, the fourth transistor 204, the fifth transistor 205, and the seventh transistor 207 to their respective OFF-states.

Then, the CPU 54a determines whether a data communication has been performed with the dual port adapter 3 in S230. Here, when the data communication has been performed with the dual port adapter 3, the CPU 54a determines whether 72 V compatibility information has been received from the dual port adapter 3 in S240.

Here, when the 72 V compatibility information has been received, the CPU 54a determines whether 72 V permission information has been received from the dual port adapter 3 in S250. Here, when the 72 V permission information has not been received, the CPU 54a proceeds to S270. On the other hand, when the 72 V permission information has been received, the CPU 54a outputs a voltage of 72 V in S260 and proceeds to S270. Specifically, the CPU 54a switches the first through third transistors 201-203 to their respective ON-states and the fourth through seventh transistors 204-207 to their respective OFF-states.

Upon proceeding to S270, the CPU 54a determines whether the dual port adapter 3 is coupled to the power-supply apparatus 2 in the same manner as described in S210. Here, when the dual port adapter 3 is coupled to the power-supply apparatus 2, the CPU 54a proceeds to S250. On the other hand, when the dual port adapter 3 is not coupled to the power-supply apparatus 2, the CPU 54a stops the voltage output in S280 and proceeds to S210.

In S230, when the data communication has not been performed with the dual port adapter 3, the CPU 54a proceeds to S290.

In S240, when the 72 V compatibility information has not been received, the CPU 54a proceeds to S290.

Upon proceeding to S290, the CPU 54a determines whether the dual port adapter 3 is coupled to the power-supply apparatus 2 in the same manner as described in S210. Here, when the dual port adapter 3 is coupled to the power-supply apparatus 2, the CPU 54a waits until the dual port adapter 3 becomes not coupled to the power-supply apparatus 2 while repeating the process of S290.

When the dual port adapter 3 becomes not coupled to the power-supply apparatus 2, the CPU 54a proceeds to S280.

The power-supply system 1 as described above can perform a data communication between the power-supply apparatus 2 and the electric work machine 4 through the dual port adapter 3. This allows the power-supply system 1 to inhibit the occurrence of a situation in which the electric work machine 4 cannot be properly driven because a discharge control parameter (e.g., the current output setting information) cannot be transmitted and received between the power-supply apparatus 2 and the electric work machine 4 and to improve the convenience for the user of the electric work machine 4.

The power-supply system 1 can perform an appropriate data communication between the battery communicator 61 and the adapter communicator 145, and between the work machine communicators 181 and 186 and the adapter communicators 149 and 159, respectively.

The power-supply system 1 can output an appropriate power-supply voltage according to a coupling status between the dual port adapter 3 and the electric work machine 4.

The power-supply system 1 can inhibit a short circuit at 72 V and inhibit damage to the first adapter 41 even if a short circuit is generated due to water attached to the terminals 91-95 exposed when the first adapter 41 is not attached to the electric work machine 4.

The power-supply system 1 can inhibit unnecessary output of the first voltage or the second voltage and can reduce power consumption.

The power-supply system 1 can output an appropriate power-supply voltage according to the dual port adapter 3.

The power-supply system 1 can supply power using both the first adapter 41 and the second adapter 42, or using either the first adapter 41 or the second adapter 42.

The power-supply system 1 can output the first voltage using both the first adapter 41 and the second adapter 42 and can output the second voltage using either the first adapter 41 or the second adapter 42.

When the second adapter 42 is attached to the second attachment portion 13b and the first adapter 41 is further attached to the first attachment portion 13a, the power-supply system 1 can detect that the first adapter 41 is attached to the first attachment portion 13a.

The power-supply system 1 allows the first adapter 41 and the second adapter 42 to perform calculation processing using a program.

The power-supply system 1 allows the microcomputer 141d of the first adapter 41 and the microcomputer 151d of the second adapter 42 to have the identical reference voltage.

Even if the first adapter 41 and the electric work machine 4 do not have the identical reference voltage, the power-supply system 1 can perform an appropriate digital communication between the first adapter 41 and the electric work machine 4.

The first adapter 41 outputs a discharge prohibition signal, which has been input from the power-supply apparatus 2 to the dual port adapter 3, to the electric work machine 4. Therefore, the power-supply system 1 can reduce a processing load of the second adapter 42.

Furthermore, the second adapter 42 includes the temperature detector 156. Therefore, the power-supply system 1 can simplify the configuration of the first adapter 41.

This power-supply apparatus 2 can switch between the first voltage and the second voltage to be output based on the electrical signal output from the dual port adapter 3 coupled to the electric work machine 4. Therefore, when a high-output electric work machine is used, the power-supply apparatus 2 can output the first voltage, and when a low-output electric work machine is used, the power-supply apparatus 2 can output the second voltage. This allows the power-supply apparatus 2 to deliver power to both the low-output electric work machine and the high-output electric work machine and to improve the convenience of a user who uses both the low-output electric work machine and the high-output electric work machine.

The power-supply apparatus 2 eliminates the necessity for the user to operate the power-supply apparatus 2 to output the second voltage, thereby further improving the user's convenience.

The power-supply apparatus 2 can obtain, from the dual port adapter 3, an electrical signal for switching between the first voltage and the second voltage by a data communication.

When a data communication with the dual port adapter 3 is established and a preset voltage switching condition is satisfied, the power-supply apparatus 2 outputs the first voltage. The voltage switching condition of this embodiment is to receive the 72 V permission information from the dual port adapter 3. This power-supply apparatus 2 eliminates the necessity for the user to operate the power-supply apparatus to output the first voltage, thereby further improving the user's convenience.

The power-supply apparatus 2 can switch the voltage to output between the first voltage and the second voltage by switching the first current path and the second current path.

The power-supply apparatus 2 can inhibit a short circuit from being generated between the respective positive electrodes and the respective negative electrodes in the first battery 51 and the second battery 52.

The power-supply apparatus 2 can perform a data communication with external devices (e.g., the battery checker 216 and the charger 217) other than the dual port adapter 3.

The power-supply apparatus 2 can charge the first battery 51 and the second battery 52 using the charger 217.

The power-supply apparatus 2 can perform a data communication with the charger 217.

The positive electrode terminal 211 is coupled to the intermediate voltage line 66, and the negative electrode terminal 212 is coupled to the negative electrode line 65. Therefore, the power-supply apparatus 2 can separately charge the first battery 51 and the second battery 52.

In the embodiment described above, the dual port adapter 3 corresponds to an example of an adapter in the present disclosure, the battery communicator 61 corresponds to an example of a power-supply communicator in the present disclosure, and the 72 V compatibility information corresponds to an example of a voltage compatibility information in the present disclosure.

The positive electrode terminal 161 corresponds to an example of a first work machine positive terminal in the present disclosure, and the negative electrode terminal 162 corresponds to an example of the first work machine negative electrode terminal in the present disclosure, and the positive electrode terminal 166 corresponds to an example of the second work machine positive electrode terminal in the present disclosure, and the negative electrode terminal 167 corresponds to an example of the second work machine negative electrode terminal in the present disclosure.

The positive electrode terminal 91 corresponds to an example of the first adapter positive electrode terminal in the present disclosure, the negative electrode terminal 92 corresponds to an example of the first adapter negative electrode terminal in the present disclosure, the positive electrode terminal 101 corresponds to an example of the second adapter positive electrode terminal in the present disclosure, and the negative electrode terminal 102 corresponds to an example of the second adapter negative electrode terminal in the present disclosure.

The power-supply connector 33 corresponds to an example of the adapter attachment portion in the present disclosure, the adapter connector 44 corresponds to an example of the power-supply attachment portion in the present disclosure, and the terminals 91-95 and the terminals 101-105 correspond to examples of the work machine attachment portion in the present disclosure.

The first battery 51 and the second battery 52 correspond to examples of the at least two battery units in the present disclosure, and the dual port adapter 3 corresponds to an example of the adapter in the present disclosure, and the battery attachment portion 13 corresponds to an example of the attachment portion in the present disclosure.

The built-in battery 50 corresponds to an example of the voltage outputter in the present disclosure, and the battery MPU 54 corresponds to an example of the output controller in the present disclosure, and the battery communicator 61 corresponds to an example of the communicator in the present disclosure.

The path extending from the positive electrode of the first battery 51 through the first transistor 201 to the first terminal 191 and the path extending from the negative electrode of the second battery 52 to the second terminal 192 correspond to examples of the first current path in the present disclosure.

The path extending from the positive electrode of the first battery 51 through the first transistor 201 to the first terminal 191 and the path extending from the negative electrode of the first battery 51 through the third transistor 203 to the third terminal 193 correspond to examples of the second current path in the present disclosure.

The path extending from the positive electrode of the second battery 52 through the second transistor 202 and the third transistor 203 to the third terminal 193 and the path extending from the negative electrode of the second battery 52 to the second terminal 192 correspond to examples of the second current path in the present disclosure.

The first through seventh transistors 201-207 correspond to examples of the switching circuit in the present disclosure, the first battery 51 corresponds to an example of the first battery unit in the present disclosure, and the second battery 52 corresponds to an example of the second battery unit in the present disclosure.

The third transistor 203 corresponds to an example of the first switch in the present disclosure, the fifth transistor 205 corresponds to an example of the second switch in the present disclosure, the second transistor 202 corresponds to an example of the third switch in the present disclosure, and the fourth transistor 204 corresponds to an example of the fourth switch in the present disclosure.

The second interlock circuit 222 corresponds to an example of the first interlock circuit in the present disclosure, and the third interlock circuit 223 corresponds to an example of the second interlock circuit in the present disclosure.

The battery checker 216 and the charger 217 correspond to examples of the external device in the present disclosure, the charging connector 208 corresponds to an example of the connector in the present disclosure, the communication terminal 213 corresponds to an example of the external communication terminal in the present disclosure, and the power-supply apparatus 2 and the dual port adapter 3 correspond to an example of the power-supply system in the present disclosure.

### [Second Embodiment]

Hereinafter, a second embodiment of the present disclosure is described with reference to the drawings. In the second embodiment, a description is made of a configuration that is different from the first embodiment. The same configurations are denoted by the same reference numerals.

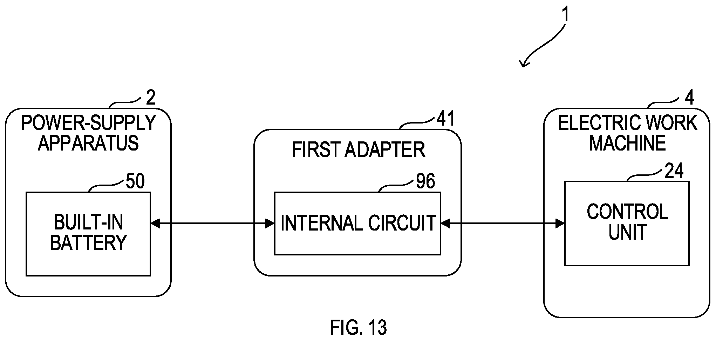

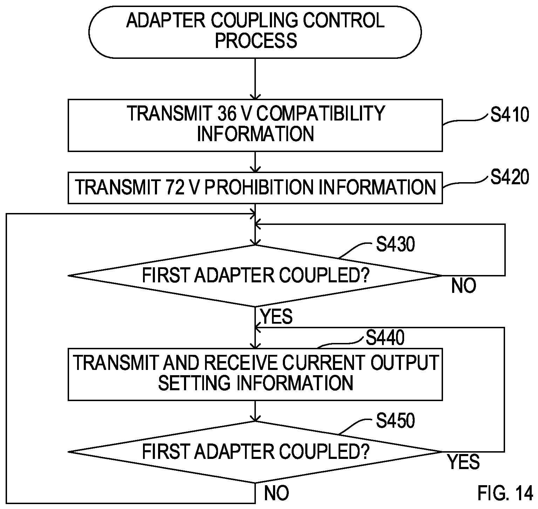

The power-supply system 1 of the second embodiment is different from the first embodiment in that a first adapter 41 is included in place of the dual port adapter 3 as shown in FIG. 13, and the adapter coupling control process is modified as shown in FIG. 14.

Next, a description is made of a procedure of an adapter coupling control process executed by the first adapter 41. The adapter coupling control process is started when the first adapter MPU 141 activates.

When the adapter coupling control process of the second embodiment is executed, in S410, the CPU 141a of the first adapter MPU 141 firstly transmits the 36 V compatibility information to the power-supply apparatus 2, indicating that the first adapter 41 is compatible with a voltage of 36 V.

Subsequently in S420, the CPU 141a transmits the 72 V prohibition information to the power-supply apparatus 2. In S430, the CPU 141a determines whether the first adapter 41 has been coupled to the first attachment portion 13a of the electric work machine 4 based on the coupling detection signal from the device coupling detector 147. Here, when the first adapter 41 is not coupled, the CPU 141a waits until the first adapter 41 becomes coupled while repeating the process of S430.

When the first adapter 41 becomes coupled, the CPU 141a transmits and receives the current output setting information in S440.

Then, in S450, the CPU 141a determines whether the first adapter 41 is coupled to the electric work machine 4. Here, when the first adapter 41 is coupled to the electric work machine 4, the CPU 141a proceeds to S440. On the other hand, when the first adapter 41 is not coupled to the electric work machine 4, the CPU 141a proceeds to S430.

The power-supply system 1 as described above can perform a data communication between the power-supply apparatus 2 and the electric work machine 4 through the first adapter 41. This allows the power-supply system 1 to inhibit the occurrence of a situation in which the electric work machine 4 cannot be properly driven because the discharge control parameter (e.g., the current output setting information) cannot be transmitted and received between the power-supply apparatus 2 and the electric work machine 4 and allows to improve the convenience for the user of the electric work machine 4.

In the above-described embodiment, the first adapter 41 corresponds to an example of the adapter in the present disclosure, and the 36 V compatibility information corresponds to an example of the voltage compatibility information in the present disclosure.

### [Third Embodiment]

Hereinafter, a third embodiment of the present disclosure is described with reference to the drawings. In the third embodiment, a description is made of a configuration that is different from the first embodiment. The same configurations are denoted by the same reference numerals.

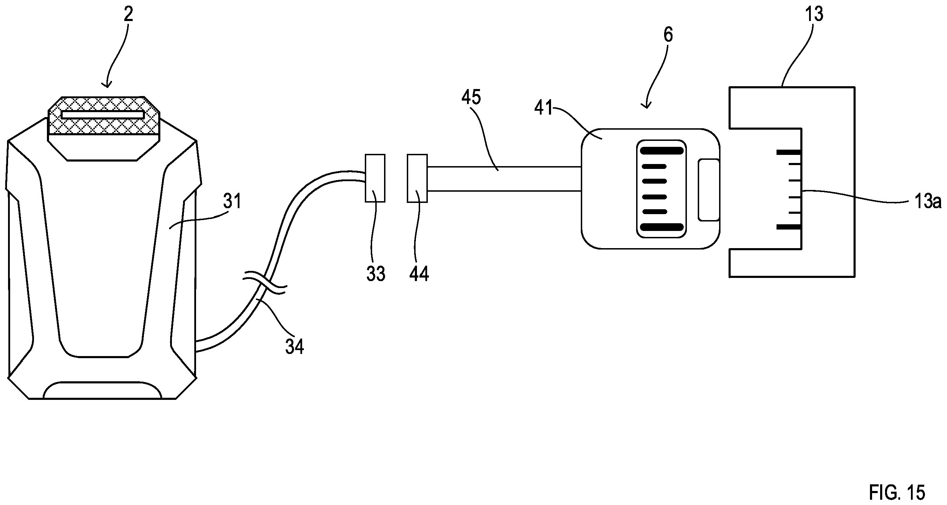

The power-supply system 1 of the third embodiment is different from the first embodiment in that a single port adapter 6 is included in place of the dual port adapter 3 as shown in FIG. 15, and the configuration of the battery attachment portion 13 is modified.

The single port adapter 6 is different from the dual port adapter 3 of the first embodiment in that the second adapter 42 and the relay code 43 are omitted from the dual port adapter 3.

The power-supply apparatus 2 of the third embodiment outputs a voltage of 36 V in the same manner as described in the first embodiment. That is, when the first battery 51 outputs a voltage of 36 V, the battery MPU 54 switches the fourth through sixth transistors 204-206 to their respective ON-states, and switches the first through third and seventh transistors 201-203, and 207 to their respective OFF-states. When the second battery 52 outputs a voltage of 36 V, the battery MPU 54 switches the second, the third, and the sixth transistors 202, 203, and 206 to their respective ON-states, and switches the first, the fourth, the fifth, and the seventh transistors 201, 204, 205, and 207 to their respective OFF-states. Note that the battery MPU 54 selects one of the first battery 51 and the second battery 52 having a higher open circuit voltage and outputs a voltage of 36 V. When outputting a voltage of 36 V, the battery MPU 54 may switch the sixth transistor 206 to its OFF-state.

The battery attachment portion 13 of the third embodiment is different from the first embodiment in that the second attachment portion 13b is omitted.

### [Fourth Embodiment]

Hereinafter, a fourth embodiment of the present disclosure is described with reference to the drawings. In the fourth embodiment, a description is made of a configuration that is different from the first embodiment. The same configurations are denoted by the same reference numerals.

The power-supply system 1 of the fourth embodiment is different from the first embodiment in that the configurations of the dual port adapter 3 and the battery attachment portion 13 are modified and a method of controlling the first through seventh transistors 201-207 is modified.

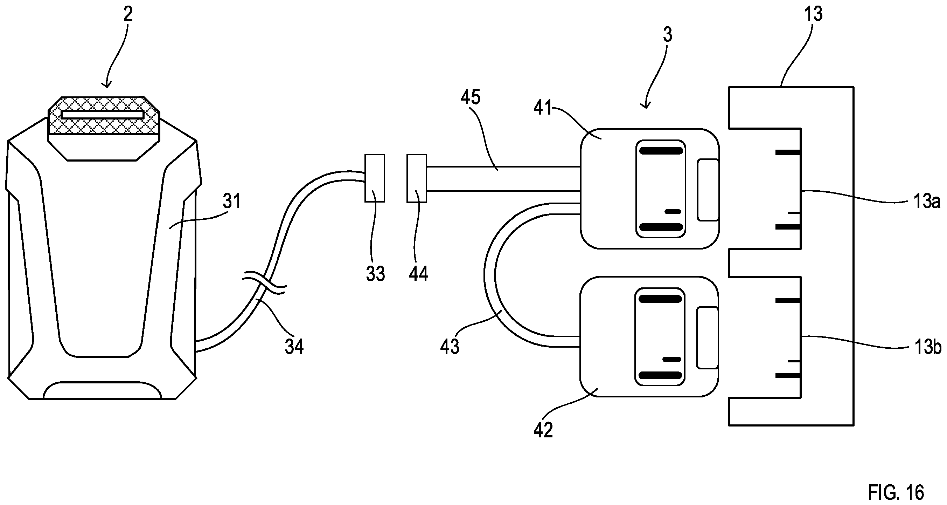

As shown in FIG. 16, the first adapter 41 of the dual port adapter 3 and the first attachment portion 13a of the battery attachment portion 13 according to the fourth embodiment are different from the first embodiment in that the number of terminals for coupling the first adapter 41 and the first attachment portion 13a to each other is reduced. Note that the first adapter 41 of the fourth embodiment includes at least the positive electrode terminal 91 and the negative electrode terminal 92. The dual port adapter 3 of the first embodiment and the dual port adapter 3 of the fourth embodiment are not compatible because they have different interfaces.

The second adapter 42 of the dual port adapter 3 and the second attachment portion 13b of the battery attachment portion 13 according to the fourth embodiment are different from the first embodiment in that the number of terminals for coupling the second adapter 42 and the second attachment portion 13b to each other is reduced. Note that the second adapter 42 of the fourth embodiment includes at least the positive electrode terminal 101 and the negative electrode terminal 102.

When the first battery 51 outputs a voltage of 36 V, the battery MPU 54 switches the fourth through sixth transistors 204-206 to their respective ON-states, and switches the first transistor 201, the second transistor 202, the third transistor 203, and the seventh transistor 207 to their respective OFF-states. As a result, in the power-supply connector 33, the negative electrode terminal 72 has 0 V, the intermediate voltage terminal 73 has 36 V, and the positive electrode terminal 71 has 18 V.

When the second battery 52 outputs a voltage of 36 V, the battery MPU 54 switches the second transistor 202, the third transistor 203, and the sixth transistor 206 to their respective ON-states and switches the first transistor 201, the fourth transistor 204, the fifth transistor 205, and the seventh transistor 207 to their respective OFF-states. As a result, in the power-supply connector 33, the negative electrode terminal 72 has 0 V, the intermediate voltage terminal 73 has 36 V, and the positive electrode terminal 71 has 18 V.

Although the embodiment for carrying out the present disclosure has been described above, the present disclosure is not limited to the above-described embodiment, and various modifications can be made.

For example, the above embodiments show a configuration in which serial communications are performed between the power-supply apparatus 2 and the dual port adapter 3, and between the dual port adapter 3 and the electric work machine 4. However, the communication between the power-supply apparatus 2 and the dual port adapter 3, and the communication between the dual port adapter 3 and the electric work machine 4 may be digital communications, such as parallel communications, in which a voltage level of the electrical signal is sequentially switched between high and low levels over time according to communication content.

The above embodiments show a configuration in which the first voltage is 72 V and the second voltage is 36 V. However, the first voltage may be greater than 42 V, and the second voltage may be less than or equal to 42 V.

Two or more functions of one element of the aforementioned embodiment may be achieved by two or more elements, and one function of one element may be achieved by two or more elements. Furthermore, two or more functions of two or more elements may be achieved by one element, and one function achieved by two or more elements may be achieved by one element. Furthermore, a part of the configurations of the aforementioned embodiments may be omitted. At least a part of the configurations of the aforementioned embodiments may be added to or replaced with another configuration of the above-described embodiments.

In addition to the power-supply system 1 described above, the present disclosure can also be achieved in various forms, such as a system including the power-supply system 1, a program for causing a computer to function as the power-supply system 1, a non-transitory tangible storage medium, such as a semiconductor memory, in which this program is recorded, and a power-supply method.

In addition to the power-supply apparatus 2 described above, the present disclosure can also be achieved in various forms, such as a system including the power-supply apparatus 2, a program for causing a computer to function as the power-supply apparatus 2, a non-transitory tangible storage medium, such as a semiconductor memory, in which this program is recorded, and a power-supply method.

### [Technical Ideas Disclosed Herein]

### [Item 1]

A power-supply system comprising:
an electric work machine;
a power-supply apparatus configured to output a power-supply voltage to be delivered to the electric work machine; and
an adapter configured to be coupled between the power-supply apparatus and the electric work machine and to relay the power-supply voltage output from the power-supply apparatus to the electric work machine;
the electric work machine including a work machine communicator configured to perform, with the adapter, a digital communication in which a voltage level of an electrical signal is sequentially switched between a high level and a low level over time according to communication content,
the power-supply apparatus including a power-supply communicator configured to perform the digital communication with the adapter, and
the adapter including an adapter communicator configured to perform the digital communication with the electric work machine and to perform the digital communication with the power-supply apparatus.

### [Item 2]

The power-supply system according to item 1,
wherein a first communication protocol of the digital communication between the power-supply communicator and the adapter communicator is different from a second communication protocol of the digital communication between the work machine communicator and the adapter communicator.

### [Item 3]

The power-supply system according to item 1 or 2,
wherein the power-supply apparatus is configured to selectively output, as the power-supply voltage, at least 0 V, a first voltage higher than 0 V, and a second voltage higher than 0 V and lower than the first voltage according to a coupling status between the adapter and the electric work machine.

### [Item 4]

The power-supply system according to item 3,
wherein the power-supply apparatus is configured to output the second voltage in response to the power-supply apparatus detecting that the adapter is coupled to the power-supply apparatus.

### [Item 5]

The power-supply system according to item 4,
wherein the power-supply apparatus is configured to obtain, by performing the digital communication with the adapter, voltage compatibility information indicating a voltage with which the adapter is compatible.

### [Item 6]

The power-supply system according to item 5,
wherein the power-supply apparatus is configured to determine, based on the voltage compatibility information obtained, whether the power-supply voltage to be output be maintained at the second voltage or be switched from the second voltage to the first voltage.

### [Item 7]

The power-supply system according to item 6,
wherein the power-supply apparatus is configured to switch from the second voltage to the first voltage after the adapter is coupled to the electric work machine in a case where the power-supply apparatus determines to switch from the second voltage to the first voltage.

### [Item 8]

The power-supply system according to any one of items 3 through 7,
wherein the adapter compatible with the first voltage is configured with a first adapter and a second adapter.

### [Item 9]

The power-supply system according to item 8,
wherein the first adapter is coupled in series with the second adapter.

### [Item 10]

The power-supply system according to item 9,
wherein the electric work machine includes a first attachment portion configured to detachably attach the first adapter thereto, and a second attachment portion configured to detachably attach the second adapter thereto,
wherein the first attachment portion further includes a first work machine positive electrode terminal and a first work machine negative electrode terminal, to both of which the power-supply voltage is delivered from the first adapter,
wherein the second attachment portion further includes a second work machine positive electrode terminal and a second work machine negative electrode terminal, to both of which the power-supply voltage is delivered from the second adapter,
wherein the first work machine negative electrode terminal is coupled to the second work machine positive electrode terminal,
wherein the first adapter further includes a first adapter positive electrode terminal to be coupled to the first work machine positive electrode terminal when the first adapter is attached to the first attachment portion, and a first adapter negative electrode terminal to be coupled to the first work machine negative electrode terminal when the first adapter is attached to the first attachment portion,
wherein the second adapter further includes a second adapter positive electrode terminal to be coupled to the second work machine positive electrode terminal when the second adapter is attached to the second attachment portion, and a second adapter negative electrode terminal to be coupled to the second work machine negative electrode terminal when the second adapter is attached to the second attachment portion, and
wherein the adapter is configured to detect that the first adapter is attached to the first attachment portion based on a voltage of the first adapter negative electrode terminal.

### [Item 11]

The power-supply system according to any one of items 8 through 10,
wherein the first adapter and the second adapter each include a microcomputer.

### [Item 12]

The power-supply system according to item 11,
wherein a ground of the microcomputer of the first adapter is common with a ground of the microcomputer of the second adapter.

### [Item 13]

The power-supply system according to item 12, further including
a level shift circuit configured to shift the voltage level of the electrical signal transmitted and received by the digital communication between the first adapter and the electric work machine.

### [Item 14]

The power-supply system according to any one of items 8 through 13,
wherein the first adapter is configured to output, to the electric work machine, a discharge prohibition signal input from the power-supply apparatus to the adapter.

### [Item 15]

The power-supply system according to any one of items 8 through 14,
wherein the second adapter further includes a temperature detector configured to detect a temperature of a cord accommodated in the second adapter.

### [Item 16]

A power-supply apparatus to output a power-supply voltage to be delivered to an electric work machine, the apparatus comprising:
an adapter attachment portion configured to detachably attach thereto an adapter to be coupled between the power-supply apparatus and the electric work machine and to relay the power-supply voltage output from the power-supply apparatus to the electric work machine; and
a power-supply communicator configured to perform, with the adapter, a digital communication in which a voltage level of an electrical signal is sequentially switched between a high level and a low level over time according to communication content.

### [Item 17]

An adapter to be coupled between an electric work machine and a power-supply apparatus to output a power-supply voltage to be delivered to the electric work machine, the adapter including:
a power-supply attachment portion configured to detachably attach the power-supply apparatus thereto;
a work machine attachment portion configured to detachably attach the electric work machine thereto; and
an adapter communicator configured to perform, with the electric work machine, a digital communication in which a voltage level of an electrical signal is sequentially switched between a high level and a low level over time according to communication content, and to perform the digital communication with the power-supply apparatus.

### [Item 18]

A power-supply apparatus comprising:
at least two battery units contained in the power-supply apparatus;
an attachment portion configured to detachably attach thereto an adapter to be coupled between the power-supply apparatus and an electric work machine;
a voltage outputter configured to selectively output at least a first voltage and a second voltage lower than the first voltage using the at least two battery units; and
an output controller configured to switch a voltage output from the voltage outputter between the first voltage and the second voltage based on an electrical signal output from the adapter attached to the attachment portion.

### [Item 19]

The power-supply apparatus according to item 18,
wherein the output controller causes the voltage outputter to output the second voltage upon a transition from a state where the adapter is not attached to the attachment portion to a state where the adapter is attached to the attachment portion.

### [Item 20]

The power-supply apparatus according to item 18 or 19, further comprising
a communicator configured to perform a data communication with the adapter.

### [Item 21]

The power-supply apparatus according to item 20,
wherein the output controller causes the voltage outputter to output the first voltage in response to the data communication being established with the adapter and a preset voltage switching condition being satisfied.

### [Item 22]

The power-supply apparatus according to any one of items 18 through 20,
wherein the voltage outputter further includes:
a first current path to output the first voltage using the at least two battery units;
a second current path to output the second voltage using the at least two battery units; and
a switching circuit configured to selectively switch between the first current path and the second current path.

### [Item 23]

The power-supply apparatus according to item 22,
wherein the at least two battery units include a first battery unit and a second battery unit, and
wherein the voltage outputter further includes:
   a first switch and a second switch disposed on a first short-circuit path extending from a positive electrode to a negative electrode of the first battery unit;
   a third switch and a fourth switch disposed on a second short-circuit path extending from a positive electrode to a negative electrode of the second battery unit;
   a first interlock circuit configured to control the first switch and the second switch so that the first switch and the second switch are not brought into their respective ON-states simultaneously; and
   a second interlock circuit configured to control the third switch and the fourth switch so that the third switch and the fourth switch are not brought into their respective ON-states simultaneously.

### [Item 24]

The power-supply apparatus according to any one of items 18 through 23, further comprising
a connector to couple to another device other than the adapter.

### [Item 25]

The power-supply apparatus according to item 24,
wherein the connector is configured to be coupleable to an external device, and
wherein the connector includes an external communication terminal to be coupled to the external device to perform a data communication with the external device.

### [Item 26]

The power-supply apparatus according to item 25,
wherein the connector is configured to be able to couple thereto a charger configured to charge the at least two battery units.

### [Item 27]

The power-supply apparatus according to item 26,
wherein a data communication is performed between the power-supply apparatus and the charger through the external communication terminal of the connector.

### [Item 28]

The power-supply apparatus according to item 26 or 27,
wherein the at least two battery units include a first battery unit and a second battery unit,
wherein the first battery unit and the second battery unit are coupled in series with each other by coupling a negative electrode of the first battery unit to a positive electrode of the second battery unit,
wherein the connector further includes a positive electrode terminal and a negative electrode terminal,
wherein the positive electrode terminal is coupled to an intermediate voltage line to which a voltage of the positive electrode of the second battery unit is applied, through a charging switch, and
wherein the negative electrode terminal is coupled to a negative electrode line to which a voltage of the negative electrode of the second battery unit is applied.

### [Item 29]

The power-supply apparatus according to any one of items 18 through 28,
wherein the first voltage is higher than 42 V and the second voltage is lower than or equal to 42 V.

### [Item 30]

A power-supply system comprising:
the power-supply apparatus according to any one of items 18 through 29; and
the adapter.

## Claims

1. A power-supply system comprising:
an electric work machine;
a power-supply apparatus configured to output a power-supply voltage to be delivered to the electric work machine; and
an adapter configured to be coupled between the power-supply apparatus and the electric work machine and to relay the power-supply voltage output from the power-supply apparatus to the electric work machine,
the electric work machine including a work machine communicator configured to perform, with the adapter, a digital communication in which a voltage level of an electrical signal is sequentially switched between a high level and a low level over time according to communication content,
the power-supply apparatus including a power-supply communicator configured to perform the digital communication with the adapter, and
the adapter including an adapter communicator configured to perform the digital communication with the electric work machine and to perform the digital communication with the power-supply apparatus.

2. The power-supply system according to claim 1,
wherein a first communication protocol of the digital communication between the power-supply communicator and the adapter communicator is different from a second communication protocol of the digital communication between the work machine communicator and the adapter communicator.

3. The power-supply system according to claim 1 or 2,
wherein the power-supply apparatus is configured to selectively output, as the power-supply voltage, at least 0 V, a first voltage higher than 0 V, and a second voltage higher than 0 V and lower than the first voltage according to a coupling status between the adapter and the electric work machine.

4. The power-supply system according to claim 3,
wherein the power-supply apparatus is configured to output the second voltage in response to the power-supply apparatus detecting that the adapter is coupled to the power-supply apparatus.

5. The power-supply system according to claim 4,
wherein the power-supply apparatus is configured to obtain, by performing the digital communication with the adapter, voltage compatibility information indicating a voltage with which the adapter is compatible.

6. The power-supply system according to claim 5,
wherein the power-supply apparatus is configured to determine, based on the voltage compatibility information obtained, whether the power-supply voltage to be output be maintained at the second voltage or be switched from the second voltage to the first voltage.

7. The power-supply system according to claim 6,
wherein the power-supply apparatus is configured to switch from the second voltage to the first voltage after the adapter is coupled to the electric work machine in a case where the power-supply apparatus determines to switch from the second voltage to the first voltage.

8. The power-supply system according to any one of claims 3 through 7,
wherein the adapter compatible with the first voltage is configured with a first adapter and a second adapter.

9. The power-supply system according to claim 8,
wherein the first adapter is coupled in series with the second adapter.

10. The power-supply system according to claim 9,
wherein the electric work machine further includes a first attachment portion configured to detachably attach the first adapter thereto, and a second attachment portion configured to detachably attach the second adapter thereto,
wherein the first attachment portion further includes a first work machine positive electrode terminal and a first work machine negative electrode terminal, to both of which the power-supply voltage is delivered from the first adapter,
wherein the second attachment portion further includes a second work machine positive electrode terminal and a second work machine negative electrode terminal, to both of which the power-supply voltage is delivered from the second adapter,
wherein the first work machine negative electrode terminal is coupled to the second work machine positive electrode terminal,
wherein the first adapter further includes a first adapter positive electrode terminal to be coupled to the first work machine positive electrode terminal when the first adapter is attached to the first attachment portion, and a first adapter negative electrode terminal to be coupled to the first work machine negative electrode terminal when the first adapter is attached to the first attachment portion,
wherein the second adapter further includes a second adapter positive electrode terminal to be coupled to the second work machine positive electrode terminal when the second adapter is attached to the second attachment portion, and a second adapter negative electrode terminal to be coupled to the second work machine negative electrode terminal when the second adapter is attached to the second attachment portion, and
wherein the adapter is configured to detect that the first adapter is attached to the first attachment portion based on a voltage of the first adapter negative electrode terminal.

11. The power-supply system according to any one of claims 8 through 10,
wherein the first adapter and the second adapter each include a microcomputer.

12. The power-supply system according to claim 11,
wherein a ground of the microcomputer of the first adapter is common with a ground of the microcomputer of the second adapter.

13. The power-supply system according to claim 12, further comprising
a level shift circuit configured to shift the voltage level of the electrical signal transmitted and received by the digital communication between the first adapter and the electric work machine.

14. The power-supply system according to any one of claims 8 through 13,
wherein the first adapter is configured to output, to the electric work machine, a discharge prohibition signal input from the power-supply apparatus to the adapter.

15. The power-supply system according to any one of claims 8 through 14,
wherein the second adapter further includes a temperature detector configured to detect a temperature of a cord accommodated in the second adapter.

16. A power-supply apparatus to output a power-supply voltage to be delivered to an electric work machine, the apparatus comprising:
an adapter attachment portion configured to detachably attach thereto an adapter to be coupled between the power-supply apparatus and the electric work machine and to relay the power-supply voltage output from the power-supply apparatus to the electric work machine; and
a power-supply communicator configured to perform, with the adapter, a digital communication in which a voltage level of an electrical signal is sequentially switched between a high level and a low level over time according to communication content.

17. An adapter to be coupled between an electric work machine and a power-supply apparatus to output a power-supply voltage to be delivered to the electric work machine, the adapter comprising:
a power-supply attachment portion configured to detachably attach the power-supply apparatus thereto;
a work machine attachment portion configured to detachably attach the electric work machine thereto; and
an adapter communicator configured to perform, with the electric work machine, a digital communication in which a voltage level of an electrical signal is sequentially switched between a high level and a low level over time according to communication content, and to perform the digital communication with the power-supply apparatus.
